(19) **Europäisches Patentamt European Patent Office Office européen des brevets**

(11) **EP 4 254 121 B1**

(12) **EUROPEAN PATENT SPECIFICATION**

(45) Date of publication and mention of the grant of the patent:
**30.04.2025  Bulletin 2025/18**

(21) Application number: **23165310.6**

(22) Date of filing: **30.03.2023**

(51) International Patent Classification (IPC):
*G05D 1/00* (2024.01)    *B60W 30/00* (2006.01)
*G08G 1/16* (2006.01)

(52) Cooperative Patent Classification (CPC):
**G05D 1/0214; G08G 1/166**

(54) **ASSISTANCE SYSTEM FOR DYNAMIC ENVIRONMENTS**

ASSISTENZSYSTEM FÜR DYNAMISCHE UMGEBUNGEN

SYSTÈME D'ASSISTANCE POUR ENVIRONNEMENTS DYNAMIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.03.2022  EP 22166079**

(43) Date of publication of application:
**04.10.2023  Bulletin 2023/40**

(73) Proprietor: **Honda Motor Co., Ltd.
Minato-ku
Tokyo 107-8556 (JP)**

(72) Inventors:
• **Puphal, Tim**
  **63073 Offenbach/Main (DE)**
• **Eggert, Julian**
  **63073 Offenbach/Main (DE)**

(74) Representative: **Beder, Jens et al
Mitscherlich PartmbB
Patent- und Rechtsanwälte
Karlstraße 7
80333 München (DE)**

(56) References cited:
EP-A1- 2 950 294        EP-A1- 3 683 782
US-A1- 2020 159 215

**Description**

The invention concerns an assistance method and a system for operating an agent in a dynamic and dense environment. In particular, the method assists in behavior planning for operating the agent using importance filtering with driving risk models.

Vehicular automation is a technical field, which uses technologies such as mechatronics or multi-agent systems to assist an operator of a vehicle in operating the vehicle in an environment. The term vehicles encompasses road vehicles, which may include an increasing number of advanced driving assistance systems, aircraft with advanced autopilots or unmanned aerial vehicles (UAV, drones), autonomously operating planetary rovers, or watercraft moving above the water as well as submersibles.

A vehicle using automation for addressing difficult tasks, for example navigation, to ease but not entirely replace human input by the operator, may be referred to as a semi-autonomous vehicle, whereas a vehicle relying solely on automation is called a robotic or autonomous vehicle. Similar techniques from automation are present in the field of robotics, in which robotic devices carry out a series of actions automatically. Subsequently, the generic term agent is used, which includes moving devices, e.g. vehicles and robots, which are able to perceive their environment, to determine and to execute actions autonomously in order to perform tasks.

Characteristic examples of tasks addressed by assistance systems for land vehicles include monitoring of blind spots around the vehicle or assisting in lane changes in a road traffic environment. The capabilities of assistance systems operating vehicles in real time depend on an availability of affordable sensors for perceiving the environment of the vehicle and of the computing power required for processing, both of which improved considerably in recent times. The road traffic environment is a particular application area, in which the increased capabilities of current assistance systems enable to move from assisting in less complex traffic scenarios on roads between cities to coping with congested and highly dynamic urban traffic scenarios.

The design of assistance systems has to address the handling of safety issues and avoiding potential collisions with other agents in the common environment. An aspect of the planning of future actions in the assistance system is the management of risks associated with the actions of the agent and ensuring compliance with safety margins. Current assistance systems may perform planning of future actions of the ego-agent using risk maps applying risk models. Analytical risk models may be applied to the domains of predicting a future evolvement of a perceived scenario in the environment, of the planning of potential actions to be performed by the ego-agent, and of warning an assisted operator or the ego-agent or autonomously performing a determined action by the ego-agent. Driving risk models predict movement of vehicles on trajectories along paths and may include risk types, e.g. collisions with other agents in the environment, collisions with static objects, risk resulting from sharp curves or regulatory risk. Risk includes the probability of an event to occur and the consequences of the event, e.g. the severity of the event. Regarding of risk during action planning for the ego-agent improves the behavior selection for the ego-agent.

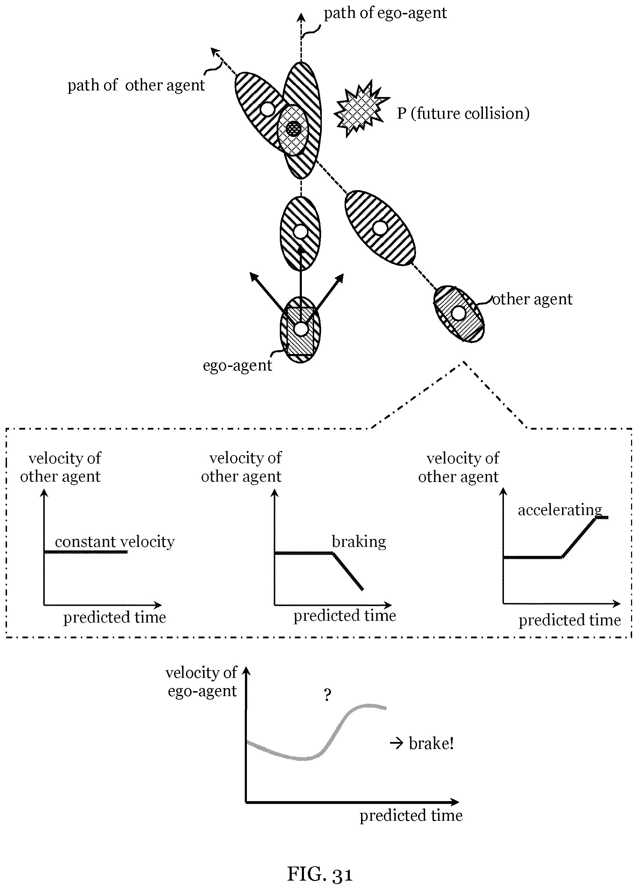

The specific example of driving risk models in a road traffic scenario may use stochastic risk models for agent-to-agent collisions. The driving risk model may assume agents that move on predicted trajectories on paths in the environment. The predicted trajectories of the agents may include general Gaussian and Poisson distributed uncertainties. The generic risk models may be extended beyond modelling the collision risk to integrate further risks, e.g. curve risk or regulatory risk. For the purpose of action planning, the ego-agent may perform a cost evaluation based on the risk model. Fig. 31 illustrates this example for a collision risk and addressing the task of the ego-agent determining with which velocity of the ego-agent to proceed on the path of the ego-vehicle in interaction with one other agent in the environment in order to mitigate the collision risk.

The ego-agent may employ the risk model for performing cooperative planning with multiple trajectories and taking into account the paths of a plurality of other agents. Current planning algorithms employing risk models are capable of handling scenarios of few agents, for example up to five agents, in real time. While this may be sufficient for many scenarios encountered in the current traffic environment, the task for an urban traffic scenario including a plurality of other agents in addition to the ego-agent may be entirely different. Even more, in an urban traffic environment the other agents may also include pedestrians with their comparatively high agility, however at low velocities. A densely populated urban environment may confront the ego-agent with traffic scenarios, which include 15, 30 or even 50 other agents in the environment of the ego-agent, which the ego-agents sensors may perceive, and which the assistance system may have to process for behavior planning for the ego-agent. Predicting the future behavior of the other agents, may have to take different potential future behavior of each of the other agents, illustrated in fig. 31 by the different velocity profiles of the one depicted other agent, into account for determining a future action of the ego-agent in time and ensuring compliance with a safe evolvement of the traffic scenario.

DE 10 2015 200 215 A1 proposes a driving assistance system, which uses a dynamic allocation of computation resources for perceiving or predicting at least one of the vehicles preceding to the ego-vehicle, or a portion of the environment of the ego-vehicle in greater detail than the other vehicle or the other portions of the environment. The driving assistance system attempts to achieve early results in perceiving and predicting objects in the environment by using a behavior prediction of perceived objects and a relevance assessment for the predicted behavior of the objects for addressing the question, which objects and which portions of the environment are indeed relevant in the scenario. The driving assistance system, which DE 10 2015 200 215 A1 discusses specifically using a lane change assistant, allocates and re-allocates computation and perception resources dynamically based on the assessed relevance of perceived objects or of areas. While using the prediction and the prediction assessment for resource allocation offers an efficient use of available resources to ensure real-time assessment of the traffic scene, densely populated traffic environments involving complex interactions between numerous individual agents in the scenario will exceed the capabilities of the described lane change assistant. DE 10 2015 200 215 A1 lacks an efficient and generally applicable approach to assess relevance of perceived objects or of areas beyond the application in the lane change assistant. EP 3 683 782 A1 discloses a method for use in a driver assistance system of an ego-vehicle. The method supports driving the ego-vehicle and comprises steps of retrieving a priority relationship between the ego-vehicle and at least one traffic participant involved in a traffic situation. The method includes selecting a prediction model for the at least one traffic participant depending on the priority relationship, predicting at last one hypothetical future trajectory for the ego-vehicle, and, based on the selected prediction model, at last one hypothetical future trajectory for the at least one traffic participant. The method calculates a behavior relevant score for the ego-vehicle based on the calculated hypothetical future trajectories.

EP 2 950 294 A1 elates to a method supporting driving an ego-vehicle and the ego-vehicle including a driver assistance system configured to carry out the method steps. At least one traffic participant and/or infrastructure element involved in a traffic situation is selected which is to be taken into consideration for the traffic scene analysis. A hypothetical future trajectory for the ego-vehicle is calculated based on the predicted current state of the ego-vehicle and is varied to generate a plurality of ego-trajectory alternatives including the calculated hypothetical future ego-trajectory. At least one hypothetical future trajectory from another traffic participant generated by predicting the current state of the traffic participant and/or calculating of a hypothetical future state sequence of the infrastructure element is determined. On basis of at least one pair of the ego-trajectory plus one other trajectory, a plurality of a risk functions over future time or along the calculated hypothetical future ego-trajectory alternatives is calculated. One risk function corresponds to one ego-trajectory alternative. The plurality of risk functions is combined into a risk map, which is then analyzed. From the analysis result, a control signal for assisting the driving of the ego-vehicle is generated.

US 2020/159215 A1 discloses a method and system for identifying high-priority agents near to a vehicle. For agents, which are high priority agents, the disclosure generates data characterizing the agents using a first prediction model. The system identifies multiple agents in an environment in a vicinity of the vehicle. The system generates a respective importance score for each of the agents by processing a feature representation of each agent using an importance-scoring model. The importance score for an agent characterizes an estimated impact of the agent on planning decisions generated by a planning system of the vehicle, which plans a future trajectory of the vehicle. The system identifies, as high-priority agents, a subset of the plurality of agents with the highest importance scores.

Thus, the aspect of scaling the implementation of an action-planning algorithm to more dynamic and more densely populated scenarios in the environment of the ego-agent becomes an increasingly important task.

The assistance method according to a first aspect of the invention, the program according to a second aspect and the assistance system according to a third aspect provide solutions to the task.

The assistance method according to the first aspect assists operation of an agent operating in a dynamic scenario involving at least one other agent in an environment of the agent. The computer implemented method comprises acquiring sensor data from the environment including data on the at least one other agent and on physical structures in the environment. The data conveys information on the environment. The method further acquires data comprising information on position and motion of the agent. It is to be noted that the term "data" is used hereinafter as a synonym for the information conveyed by using the data and vice versa. The method calculates an importance score for each agent of the at least one other agent based on the acquired sensor data and the acquired position and motion data. The importance score is a quantitative physical value describing a relevance of the particular agent for the operated agent based on the agent's dynamics. Then, the method generates a list comprising the at least one other agent based on the calculated importance scores of the at least one other agent, and partitions the generated list in at least one partition based on the importance score of the at least one other agent. Each partition includes at least one other agent. The method generates a prediction result by predicting a behavior of the at least one other agent included in the at least one partition based on the sensor data and the position and motion data using a selected behavior prediction model. The selected behavior prediction model is selected from a plurality of behavior prediction models based on the importance score of the at least one agent included in the at least one partition. The method outputs the prediction result to a planning and control system for operating the agent or for generating and outputting an information signal or a warning signal via a human machine interface. The method is characterized by comprising, in the step of calculating the importance score, applying a risk shadowing process to the data on the at least one other agent and on the physical structures in the environment, wherein the risk shadowing process comprises performing a reachability analysis based on the sensor data and the position and motion information for determining occupied areas for the agent and the at least one other agent in the environment over time, determining overlapping areas from the occupied areas of the agent and the at least one other agent, and determining a relevance of each of the at least one other agent based on the determined overlapping areas.

The method according to the first aspect computes an importance score for each other agent in the environment of the agent (ego-agent, operated agent) and arranges the other agents perceived in the environment in a ranked list ordered according to their respective importance scores. The method partitions the generated list of the other agents into partitions depending on the other agent's importance scores. The method predicts the other agent's future behavior based on the other agents membership in a respective partition of the ordered list. The method thereby enables to apply a specifically selected behavior prediction model for each partition, which may, for example, differ from the behavior prediction model selected for another partition with respect to its prediction accuracy and its computational complexity. The method may, for example select the accuracy and computational complexity of the behavior prediction model according to the importance scores of the other agents included in that partition. This may even include filtering out, and thereby neglecting those of the other agents, which have a particular low importance score. By partitioning and ranking the other agents according to their importance score enables to optimize use of processing resources by concentrating the scarce resources to those other agents, which have a high importance for the agent in the future evolvement of the traffic scenario. The method according to the first aspect thereby generates a processing environment for handling of highly dynamic scenarios in the environment of the agent, which includes a large number of other mobile agents present in the environment.

The method may be extended to involve at least two agents in the environment of the agent (ego-agent) operating in the dynamic scenario involving the at least one other agent.

Furthermore, the method may partition the generated list of the other agents into partitions depending on the other agent's importance scores, wherein one other agent may be in a first partition (e.g. "at least a bit important other agents") and in a second partition (e.g. "very important other agents") simultaneously.

This may result in the other agent being considered in three different parallel planning steps, one planning step for each partition. Thus, an advantageous effect of a redundant planning is achieved.

Generating at least two partitions, each partition comprising a subset of a plurality of other agents, and performing prediction for the other agents included in each partition separately introduces redundancy and thereby also safety and robustness to the method for assisting in operating in agent. This may further be improved by adding the communication capability between the individual partitions in order to inform each partition on other agents that are included in both partitions.

Furthermore, the method may implement a switchover probability which enables to perform processing of generating a prediction result from a lower partition to a higher partition in case the higher partition already succeeds in finding a solution for the prediction problem.

Filtering the agents with particular low importance score may further reduce computational speed of the evaluation due to reducing the number of other agents having to be taken into consideration.

The dependent claims define further advantageous embodiments.

According to an embodiment, the plurality of behavior prediction models comprises individual behavior prediction models, which differ with respect to at least one of prediction accuracy and computational complexity.

The at least one partition may comprise at least a first partition including the other agents having a first range of the importance score and a second partition including the other agents having a second range of the importance score. The first range includes importance scores, which are smaller than the importance scores included in the second range, and the method comprises selecting the behavior prediction model for the first partition with a lower computational complexity than the behavior prediction model for the second partition.

The method according to an embodiment comprises discarding other agents with a calculated importance score below a threshold when generating the list.

According to an embodiment, determining the relevance of each at least one other agent includes disregarding the other agent in case the occupied areas of the agent and the at least one other agent do not exist.

Additionally or alternatively, determining the relevance of each of the at least one other agent includes computing a continuous relevance score of the other agent by calculating a size of the overlapping area or a distance of the occupied areas.

Calculating the importance score according to one embodiment comprises decreasing an influence of a first other agent of the at least one other agent based on an influence of at least one second other agent of the at least one other agent.

According to one embodiment, calculating the importance score includes applying a risk model that regards an influence of the at least one other agent on the agent for computing the importance score of the at least one other agent.

The method may comprise, in one particular embodiment, calculating the importance score as a first importance score for each of a plurality of other agents by applying a first method. The method then proceeds by discarding a subset of the plurality of other agents based on a first filter criterion for the calculated first importance score for generating a first filtered list of the plurality of other agents. The method may then calculate the importance score as second importance score by applying a second method for the plurality of other agents, discarding a second subset of the plurality of other agents included in the generated list based on a second filter criterion for the calculated second importance score for generating a second filtered list of the plurality of other agents.

Advantageously, the first method for calculating the first importance score may have a lower computational complexity than the second method for calculating the second importance score.

The method according to an embodiment may calculate the importance score using a path distance model, a trajectory distance model, a Gaussian model, or a survival analysis model.

The agent may be a mobile robotic device, and the at least one other agent may include other mobile devices, in particular other mobile robotic devices.

Additionally or alternatively, the agent is an ego-vehicle, and the at least one other agent is another traffic participants in a road traffic scenario, in particular at least one of other vehicles, cyclists and pedestrians.

The operated agent and the at least one other agent may be vessels in a maritime traffic scenario.

The operated agent and the at least one other agent may be air vehicles in an air traffic scenario.

The operated agent and the at least one other agents may be space vehicles in a space environment.

The program according to the second aspect comprises instructions, which, when a computer executes the program, cause the computer to carry out the method according to the first aspect.

The assistance system according to the third aspect assists in operating an agent that operates in a dynamic scenario involving at least one other agent in an environment of the agent. The system comprises at least one sensor configured to acquire sensor data from the environment including data on the at least one other agent and/or on physical structures in the environment. The system further comprises at least one ego-sensor configured to acquire ego motion data on the agent, and at least one processor. The at least one processor is configured to calculate an importance score for each of the at least one other agent based on the sensor data on the environment and the acquired ego motion data. The importance score is a quantitative physical value describing a relevance of the other agent for the agent based on the agent's dynamics. The at least one processor generates a list comprising the at least one other agent based on the calculated importance score of the at least one other agent, and partitions the generated list in at least one partition based on the importance score of the at least one other agent. Each partition includes at least one other agent. The at least one processor is configured to generate a prediction result by predicting a behavior of the at least one other agent of the at least one partition based on the sensor data using a selected behavior prediction model. The behavior prediction model for predicting the behavior of the at least one other agent included in the at least one partition is selected from plural behavior prediction models based on the at least one partition the other agent belongs to. The at least one processor is further configured to provide the prediction result to a planning and control system for operating the agent or for generating and outputting an information signal or a warning signal via a human machine interface. The assistance system is characterized in that the processor is configured to calculate the importance score comprising applying a risk shadowing process to the data on the at least one other agent and on the physical structures in the environment. The risk shadowing process comprises performing a reachability analysis based on the sensor data and the position and motion information for determining occupied areas for the agent and the at least one other agent in the environment over time, determining overlapping areas from the occupied areas of the agent and the at least one other agent, and determining a relevance of each of the at least one other agent based on the determined overlapping areas.

The assistance system according to the third aspect achieves the corresponding advantages as the computer-implemented method according to the first aspect.

The planning and control system may directly operate the agent by generating and outputting control signals for the agent operating in a dynamic scenario involving the at least one other agent. Additionally or alternatively, the planning and control system may generate and output further control signals to output devices for communication to an operator, which assist the operator in operating the agent in the dynamic scenario involving the at least one other agent.

The aspects and features of embodiments refer to the attached drawings, in which

Fig. 1    depicts the sequence of filtering and sorting of perceived agents in the environment according to an embodiment,

Fig. 2    illustrates aspects of a filtering step in an embodiment,

Fig. 3    depicts a traffic scenario on a road section involving a plurality of other agents and the ego-agent illustrating the implications of the filtering,

Fig. 4    shows a table providing an overview over examples of risk models within three distinct types of risk models,

Fig. 5    illustrates the current distance model as a first example of a distance model,

Fig. 6    illustrates the path distance model as a second example of a distance model,

Fig. 7       illustrates the closest encounter model as a first example of a time model,

Fig. 8       illustrates the closest encounter model with headway as a second example of a time model,

Fig. 9       illustrates the closest encounter model with 2D-headway as a third example of a time model,

Fig. 10      illustrates the circle approximation model as a first example of a stochastic model,

Fig. 11      illustrates the 2D-Gaussian model as a second example of a stochastic model,

Fig. 12      illustrates the survival analysis model as a third example of a stochastic model,

Fig. 13      depicts a traffic scenario at a road crossing involving a plurality of other agents and the ego-agent,

Fig. 14      illustrates the processing sequence of an exemplary embodiment of the importance filtering process,

Fig. 15      illustrates the processing sequence of an exemplary embodiment of the performance analysis of the importance filtering process,

Fig. 16      illustrates an application of importance filtering with a first risk threshold,

Fig. 17      illustrates an application of importance filtering with a second risk threshold,

Fig. 18      illustrates an application of importance filtering with a third risk threshold,

Fig. 19      illustrates an application of importance filtering using the current-distance risk model,

Fig. 20      illustrates an application of importance filtering using the survival-analysis risk model,

Fig. 21      illustrates the performance analysis of different risk models for filtering of agents in a traffic scenario,

Fig. 22      shows a graph comparing performance of different risk models for filtering of agents in a traffic scenario,

Fig. 23      shows a first exemplary road traffic scenario illustrating the concept of risk shadowing,

Fig. 24      shows a second exemplary road traffic scenario illustrating the concept of risk shadowing,

Fig. 25      shows a third exemplary road traffic scenario illustrating the concept of risk shadowing,

Fig. 26      illustrates the processing sequence of an exemplary embodiment of the risk shadowing process,

Fig. 27      illustrates a first step in the processing sequence of an exemplary embodiment of the risk shadowing process,

Fig. 28      illustrates a second step in the processing sequence of an exemplary embodiment of the risk shadowing process,

Fig. 29      illustrates a third step in the processing sequence of an exemplary embodiment of the risk shadowing process,

Fig. 30      shows an application example for the risk shadowing process,

Fig. 31      illustrates a simple traffic scenario involving an ego-vehicle and one other vehicle on intersecting paths in the traffic environment, and

Fig. 32      provides an overview over structural components of the assistance system.

The discussion of the figures uses same reference signs in different figures to denote same or corresponding elements. The discussion dispenses with discussing same reference signs for different figures wherever considered possible without adversely affecting understanding.

The following discussion of embodiments predominantly references a road traffic scenario including a plurality of vehicles, bicycles and pedestrians as specific examples of the other agents in the environment of an ego-vehicle as a specific example for the ego-agent. It suffices to mention that the road traffic scenario is only one application example, which is of particular commercial interest and useful for illustrating an embodiment of the invention. Application of the method and system as defined in the attached claims is by no means restricted to the discussed road traffic scenario.

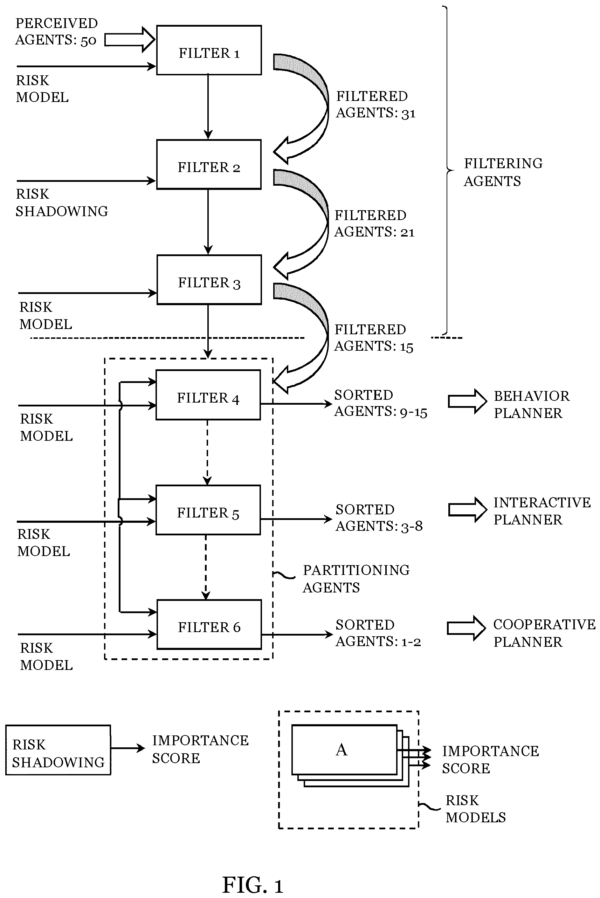

Fig. 1 depicts the sequence of filtering and sorting of perceived agents in the environment according to an embodiment.

The processing illustrated in fig. 1 starts with a number of other agents, which a sensor suite of the agent (the ego-agent) perceives in the environment of the ego-agent as input. The sensor suite may include at least one sensor. As shown in fig. 1, the sensor suite of the ego-agent perceives 50 other agents in the environment of the ego-agent, thus a densely populated scenario including a plurality of other agents is present in within the range covered by the sensor suite.

The at least one sensor further acquires sensor data including data on the other agents and on objects and structures in the environment of the ego-agent. The method acquires position and motion data of the ego-agent. In particular, the position and motion data on the ego-agent includes data on a current state of the go-agent. The current state of the ego-agent may include a current position of the ego-agent, a heading of the ego-agent, a velocity of the ego-agent, and an acceleration or deceleration of the ego-agent. The method acquires data on the current state of the ego-agent relative to a map of the environment.

The method acquires the sensor data relative to the map of the environment. Thus, a common processing of the sensor data and the position and motion data by at least one processor becomes possible.

The processing depicted in fig. 1 comprises a sequence of six filtering steps by filters 1 to 6. The number of the filters may differ from the shown number.

Filter 1, filter 2, and filter 3 form part of a first processing sequence for filtering the other agents perceived by the sensors based on a risk model selected for the particular filter 1, filter 2, and filter 3.

The method may use a plurality of risk models as indicated in the lower right portion of fig. 1. Each filter 1, 2, 3 may use a specific risk model selected from the plurality of risk models.

Alternatively, at least one filter 1, 2, and 3 may perform risk shadowing using a particular risk shadowing processing. Fig. 1 indicates the approach of risk shadowing as a particular approach for filtering in the lower left portion of fig. 1.

For example, filter 2 may apply risk shadowing for filtering.

The input to filter 1 as first filtering step are the perceived other agents. In the shown example, filter 1 receives filter input data including data on 50 perceived agents as input. Filter 1 performs filtering using a first selected risk model of the plurality of risk models on the filter input data. Filtering the filter input data with the first risk model provides filter output data including data on 31 other agents at the filter output of filter 1.

Filter 1 performs filtering of the 50 perceived other agents to provide 31 filtered other agents as first filter output data. The first filter output data is subsequently fed as second filter input data to filter 2. According to figure 1, filter 2 applies risk shadowing processing to the second filter input data. The filter 2 performs risk shadowing on the second filter input data, which includes data on 31 filtered agents, in order to generate second filter output data including data on 21 filtered other agents.

The second filter output data provided by filter 2 is subsequently provided to filter 3 representing the third and final step of filtering other agents.

The input to filter 3 as third filtering step are the 21 filtered other agents output by filter 2. In the example, filter 3 receives filter input data including data on 21 other agents as input. Filter 3 performs filtering using a third selected risk model of the plurality of risk models on the filter input data provided to filter 3. Filtering the third filter input data with the third risk model provides third filter output data including data on 15 other agents at the filter output of filter 3.

The process of filtering other agents reduces the number of other agents for further processing from 50 perceived other agents to 15 filtered other agents. Filtering out, or discarding, 35 other agents from the original 50 perceived other agents results in a corresponding increase in computation speed and reduction in processing complexity of a subsequent processing in a behavior prediction processing in an action planning module.

Reducing the number of other agents from the original number of perceived agents to the reduced number of filtered agents enables to use a planning algorithm which takes into account interactions between different agents including the ego-agent and the remaining other agents after filtering even in crowded and highly dynamic scenarios in the environment. The filtering approach bases on applying risk models, and therefore suppresses possibly fatal effects of the achieved reduction in complexity achieved by the process of filtering the other agents.

Using a filter cascade, comprising in fig. 1 three subsequent filter stages including filter 1, filter 2, and filter 3, enables to optimize each filter stage of the filter cascade individually, by selecting a specific risk model out of the plurality of risk models, and by designing the parameters of the risk model used for the filter stage respectively.

Filter 4, filter 5, and filter 6 form part of a second processing sequence for partitioning the filtered other agents obtained by the first processing sequence for filtering. Filters 4, 5, 6 are arranged in series.

Each filter 4, 5, 6 used for the partitioning processing employs a selected risk model for generating a set of filter output data from a set of filter input data based on the respectively selected risk model.

The selected risk model for each of the filters 4, 5, 6 is selected from the plurality of risk models, which are available.

Filter 4 obtains the third filter output data provided by the third filter as fourth filter input data. Thus, the fourth filter input data includes data on a filtered set of 15 other agents. Filter 4 applies a fourth selected risk model to the fourth filter input data and generates a first ranked list of other agents based on the calculated importance score. The calculated importance score is a first importance score calculated by applying the fourth risk model.

Filter 4 generates a first partition of the other agents included in the fourth filter input data and outputs the sorted agents included in the first partition. The first partition of the first ranked list of the other agents correspond to the other agents included in the first ranked list with the lowest importance score. The first partition is generated by discarding a first subset of the other agents from the first ranked list of other agents, whose respective calculated importance score is smaller than a fourth threshold.

In fig. 1, the first partition comprises the filtered and sorted other agents, which outputs, for example, 9 to 15 agents, which are considered as important after the first partition of the 15 filtered and sorted other agents, which were input to the fourth filter.

Filter 5 obtains fifth filter input data, which corresponds to the third filter output data, and uses a fifth selected risk model of the plurality of risk models to generate a second ranked list of other agents based on the calculated importance score. The calculated importance score is a second importance score calculated by applying the fifth risk model.

Filter 5 generates a second partition of the other agents included in the fifth filter input data and outputs the sorted agents included in the second partition. The second partition of the second ranked list of the other agents correspond to the other agents included in the second ranked list with the lowest second importance score. The second partition is generated by discarding a second subset of the other agents from the second ranked list of other agents, whose respective calculated importance score is smaller than a fifth threshold.

In fig. 1, the second partition comprises the filtered and sorted other agents, which are one importance level higher than the filtered and sorted other agents included in the first partition, for example, three to eight other agents are considered in the second partition of the filtered and sorted other agents, which were input to the fifth filter.

Filter 6 obtains sixth filter input data, which corresponds to the third filter output data, and uses a sixth selected risk model of the plurality of risk models to generate a third ranked list of other agents based on the calculated importance score. The calculated importance score is a third importance score calculated by applying the sixth risk model.

Filter 6 generates a third partition of the other agents included in the sixth filter input data and outputs the sorted agents included in the third partition. The third partition of the third ranked list of the other agents correspond to the other agents included in the third ranked list with the lowest third importance score. The third partition is generated by discarding a third subset of the other agents from the third ranked list of other agents, whose respective calculated importance score is smaller than a sixth threshold.

In fig. 1, the third partition comprises the filtered and sorted other agents, which yet have an importance level higher than the filtered and sorted other agents included in the first partition and in the second partition, for example, 1 or 2 other agents are considered in the third partition of the filtered and sorted other agents, which were input to the sixth filter.

Filter 4, filter 5, and filter 6 perform the second processing sequence for partitioning the filtered other agents obtained by the first processing sequence for filtering. Filters 4, 5, 6, provide three partitions of other agents based on calculated importance scores. The importance scores are calculated using at least one selected risk model.

The generated first partition of other agents includes other agents after the filtering, which have a calculated importance score value exceeding the fourth threshold.

A subsequent behavior-planning algorithm may apply a regular risk-based planning method with lower computational cost. Other agents included in the first partition may be used with one predicted trajectory with an associated uncertainty.

The generated second partition of other agents includes other agents after the filtering, which have a calculated importance score value exceeding the fifth threshold.

A subsequent interactive planning algorithm may apply an interactive model of medium complexity in order to solve more advanced driving situations. Other agents included in the second partition may be used with one single predicted trajectory with an associated fallback intention trajectory.

The generated third partition of other agents includes other agents after the filtering, which have a calculated importance score value exceeding the sixth threshold.

A cooperative planning algorithm may apply a complex cooperative behavior model, other agents included in the third partition may be used with multiple predicted trajectories and paths.

The cooperative planning algorithm may have a significantly higher computation complexity than the interactive planner applying a model of medium complexity and is therefore only used for a small number of other agents included in the third partition, which have an importance level exceeding the importance levels of the first partition and the second partition.

The partitioning processing in filters 4, 5, 6 in particular includes a redundancy, which adds safety and robustness to the method, which is advantageous and important for a situation analysis of a traffic scenario. A planning process will use results of the situation analysis in the next step to determine suitable actions for performing by the ego-agent in the analyzed scenario. The redundancy and robustness of the processing structure of figure 1, in particular the second processing sequence of partitioning the filtered other agents is enhanced by the possibility of communicating information concerning individual other agents, which are present in different filter levels, e.g. in the two or even three of the first partition, the second partition and the third partition. In the partitioning processing, a filter of a filter stage may cease processing for a specific other agent when a higher filter does not provide a solution, and processing including the specific other agent may proceed on the lower level with the lower filter.

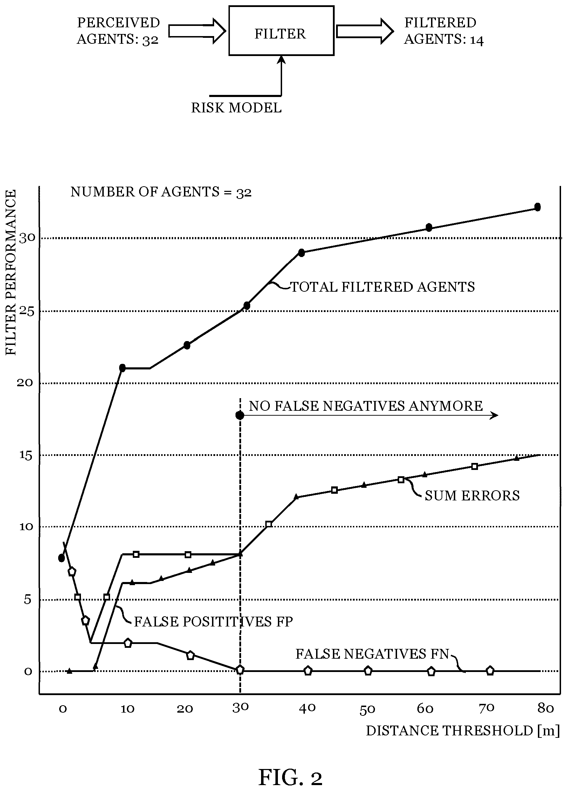

Fig. 2 illustrates aspects of a filtering stage in a filter in an embodiment.

In particular, fig. 2 shows aspects of filter design and considerations when filtering filter input data using a risk model in order to generate filter output data. The filtering in the filter stage based on calculating an importance score using a selected risk model for each other agent, in particular the data of the other agent included in the filter input data. Subsequently, the filter compares each calculated importance score with a filter threshold (threshold). In case the calculated importance score value exceeds the threshold, the respective other agent is included in the filter output data as a filtered other agent.

In the depicted example the filter input data includes 32 perceived other agents. The filter output data includes a filtered set of other agents, which includes 14 other agents.

The filter performance of the filter depends on the risk model applied for calculating the importance score and the filter threshold.

Selecting the risk model from the plurality of risk models takes into account, that different risk models show different characteristics.

For example, risk models with an increased accuracy suffer from an increased computation time.

Risk models with decreased accuracy on the other hand will not have the capability to filter out a partition that includes a small number of other agents with a high importance score.

Designing a specific filter stage will set the filter threshold to a value so that the filter stage provides no or almost no false negative errors, and only some false positive errors occur during filtering.

In the exemplary case shown in fig. 2, the threshold is set to a distance threshold value of 30 m, which achieves no false negatives, while the distance threshold value of 30 m does provide a yet acceptable number of false positives, which would increase when increasing the distance threshold value beyond 30 m.

A false negative is an agent that is not included in the output of the filter but is actually important. Thus, a false negative agent is filtered out and therefore might generate safety issues, as the planner would not consider the false negative agent, and might create an accident as a consequence.

A false positive is an agent that is still included in the output of the filter although it is actually not important and could be neglected safely, without inducing adverse consequences. In order to ensure safety, it is more important to avoid inducing false negatives than to induce false positives. This aspect is considered when setting the respective threshold accordingly.

The design of the filter using a selected risk model takes into regard the computation speed of the filtering process on the one hand, which is of particular importance for real time application and for coping with highly dynamic scenarios in the environment of the ego-agent. On the other hand, design of the filter using a selected risk model takes into regard the number of filtered other agents of the filtering process, which is of particular importance for coping with highly dynamic scenarios involving a significant number of other agents in the environment of the ego-agent.

The embodiment copes with these design targets of the filtering approach by using different selected risk models from the plurality of risk models in subsequent filter stages.

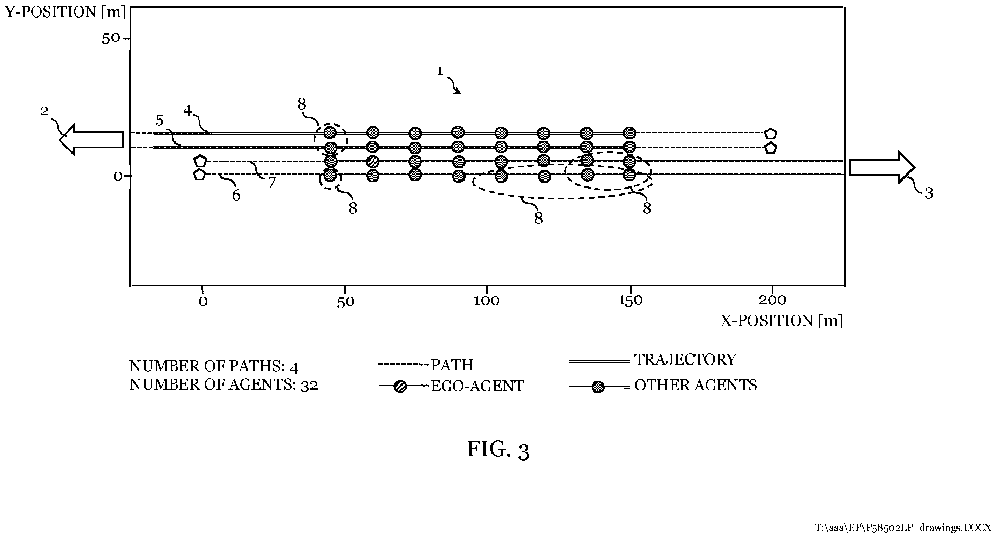

Fig. 3 depicts a traffic scenario on a road section involving a plurality of other agents and the ego-agent illustrating the implications of the filtering.

Generally, filtering of a set of other agents using a risk model to generate a filtered set of other agents has two particular aspects. A first aspect of the filtering approach using the risk model is that a contribution of single agents to the complete risk in the perceived dynamic scenario in the environment of the ego-agent is regarded. The second aspect of the filtering approach concerns the filtering out or disregarding of other agents from further processing whose importance score not exceeds a risk threshold value. The effect of this approach is that, other agents are filtered out and not considered for further processing, because they do not essentially influence the future behavior of the ego-agent.

Fig.3 illustrates this in traffic scenario including 32 agents on a straight road section 1 that has two lanes per driving direction, a first driving direction 2 to the left and second driving direction 3 into the opposite direction of the first driving direction 2. The road section 1 provides four paths 4, 5, 6, 7

The 32 agents include the ego-agent and 31 other agents. Fig. 3 shows the trajectories of the 31 other agents and the ego-agent along the paths 4, 5, 6, 7 into their respective first or second driving direction 2, 3.

Fig. 3 depicts the other agents, whose calculated importance score indicates that their importance relative to the ego-agent in the shown road traffic scenario in the perceived environment is low, by enclosing them with ellipses 8 with broken lines. The other agents within these ellipses 8 may be disregarded for further consideration without adversely affecting the results of a subsequent action planning and action taken by the ego-agent based on the result of the action planning.

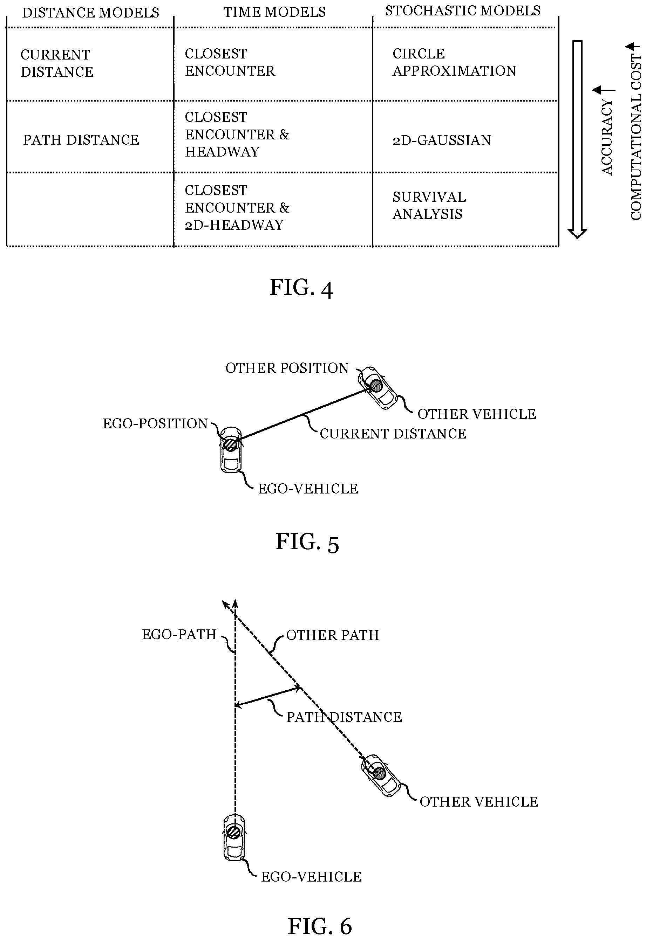

Fig. 4 shows a table providing an overview over examples of risk models within three distinct types of risk models.

The filtering stage implemented with filters 1, 3, 4, 5, 6 each use a selected risk model selected out of a plurality of risk models. Fig. 4 displays in form of a table an example for the plurality of risk models in three different types of risk model, which may be employed in the filters 1, 3, 4, 5, 6.

The table arranges each shown type of risk model in one column. Within one type, the risk models are arranged from top to bottom of the table according to increasing accuracy of the of the resulting importance score that respective risk model provides. An increasing accuracy of the risk model corresponds to an increase in computational cost and thereby a respective use of processing resources by the risk model as indicated on the right side of the table.

Figs. 5 to 12 show specific examples to determine a metric providing a continuous value describing an interaction between the two agents in the perceived scenario. The determined metric represents an instance of the importance score determined by the risk model.

Figs. 5 to 12 illustrates for each risk model of fig. 4, how the risk model computes the importance score for an interaction between the other agent and the ego-agent. Figs. 5 to 12 use a basic road traffic scenario of the ego-agent and the other agent moving on respective trajectories on intersecting paths in the environment of the ego-agent. The interaction corresponds to a predicted collision between the other agent and the ego-agent.

Generally, the risk model provides a risk value, which is in range between 0 and 1 and describes the probability of a collision between agents. Severity outcome of risk is neglected in present case. The importance score is defined as the risk value provided by the risk model. A high risk value means a high risk and describes a high importance since the other agent will influence the ego-behavior of the operated agent. Distance models and time models can be transferred into a risk value, in particular by regarding the inverse of the distance or the time. The first type of risk models are distance models in the left column.

The second type of risk models are time models in the center column of fig. 4.

The third type of risk models are stochastic models in the right column of fig. 4.

Neither the number of types of risk models, nor the number of risk models of fig. 4 is exhaustive. The shown risk models represent examples for risk models, which proved useful for implementing the filters 1, 3, 4, 5, 6. Using other risk models in an implementation is equally possible and might offer different or even better results.

Fig. 5 illustrates the current distance model as a first example of a distance model.

The distance model determines the importance score for the interaction between the ego-agent and the other agent, the importance score representing a collision probability between the ego-agent and the other agent, by computing a current distance between a determined current position of the ego-agent (ego-position) and the position of the other agent (other position).

Fig. 6 illustrates the path distance model as a second example for a distance model.

The path distance model determines the importance score for the interaction between the ego-agent and the other agent by computing a path distance between a path of the ego-agent (ego-path) and a path of the other agent (other path). In particular, the path distance corresponds to a minimum of the distance between the path of the ego-agent and the path of the other agent determined on a map of the environment.

In the particular example of intersecting paths, the distance is zero, ant he risk is at a maximum, which also means the importance is maximum.

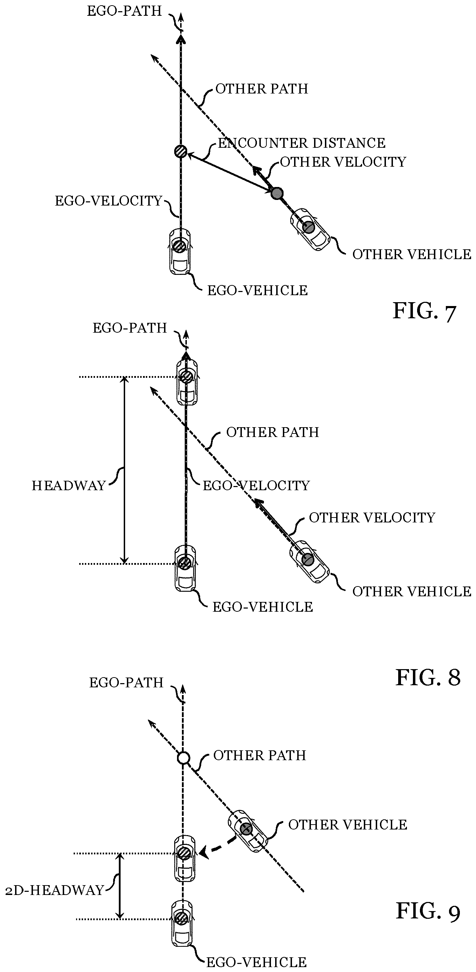

Fig. 7 illustrates the closest encounter model as a first example of a time model.

The closest encounter model determines the importance score for the interaction between the ego-agent and the other agent by computing a distance for the point of closest encounter between a trajectory of the ego-agent moving with a velocity (ego-velocity) along the ego-path and a trajectory of the other agent moving with its velocity (other velocity) along the other path. The closest encounter distance is the minimum of the distance between the ego-agent and the other agent, which is predicted for future time steps.

Fig. 8 illustrates the closest encounter model with headway as a second example of a time model.

The closest encounter with headway model determines the importance score for the interaction between the ego-agent and the other agent by combining the closest encounter distance according fig. 7 with a calculated time headway. The time headway is calculated as the time that elapses until the ego-agent reaches the position of the other agent on the same path, assuming that the other agent comes to a sudden stop. The closest encounter distance is determined by predicting the distance between a trajectory of the ego-agent moving with a velocity (ego-velocity) along the ego-path and a trajectory of the other agent moving with its velocity (other velocity) along the other path for future points in time. The closest encounter distance is the minimum of the distance between the ego-agent and the other agent, which is predicted for the future time steps. The headway is calculated by determining the distance from the current position of the ego-agent to the predicted future position of the ego-agent for that point in time, when the other agent on its predicted trajectory on its path intersects with the path of the ego-agent.

Fig. 9 illustrates the closest encounter with 2D-headway model as a third example of a time model.

The closest encounter with 2D headway model determines the importance score for the interaction between the ego-agent and the other agent by combining the closest encounter distance according fig. 7 with a calculated 2D-headway distance. The closest encounter distance is determined by predicting the distance between a trajectory of the ego-agent moving with a velocity (ego-velocity) along the ego-path and a trajectory of the other agent moving with its velocity (other velocity) along the other path for future points in time. The closest encounter distance is the minimum of the distance between the ego-agent and the other agent, which is predicted for the future time steps. The 2D-headway is calculated by determining whether there exists an intersection point between the path of the ego-agent and the path of the other agent. If there is an intersection point, the other vehicle is projected onto the path of the ego-vehicle. A distance to the intersecting point is taken as a reference to project the other agent's position with the same distance to the ego-path. Subsequently, the 2D-headway is computed as the distance between the current position of the ego-agent and the projected position of the other agent on the path of the ego-agent. By calculating the headway again longitudinally, a two-dimensional form of the headway is achieved, which can formulate a time-based risk model R2D-TH.

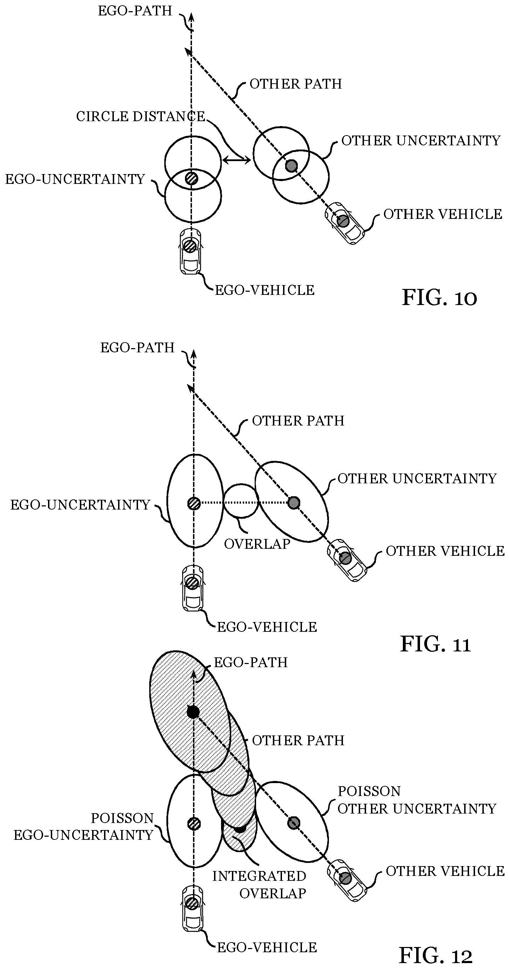

Fig. 10 illustrates the circle approximation model as a first example of a stochastic model.

The circle approximation model takes an uncertainty of the predicted position of the ego-agent on the predicted path of the ego-agent and an uncertainty of the predicted position of the other agent on the predicted path of the other agent into account. Circles approximate the uncertainties of the position of respective agent. The circle approximation model determines the importance score for the interaction between the ego-agent and the other agent by determining the minimum of the distance (circle distance) between the circle approximation of the uncertainty of the position of the ego-agent and the circle approximation of the uncertainty of the corresponding position of the other agent along their predicted trajectories. The circles in fig. 10 may approximate a 99 % probability of a Gaussian distribution. The distance corresponds to a distance between circles of the ago-agent and the other agent at same points in time. With regard to the illustration of fig. 10, it is to be noted that the paths of the ego-agent and of the other agent intersect only in case the agents would be at the same time at the intersecting point and the circle approximation is zero. Contrary to the path distance model, the circle approximation model includes a prediction for the position of the ego-agent and the other agent.

Fig. 11 illustrates the 2D-Gaussian model as a second example of a stochastic model.

The 2D-Gaussian model takes an uncertainty of the predicted position of the ego-agent on the predicted path of the ego-agent and an uncertainty of the predicted position of the other agent on the predicted path of the other agent into account. 2D-Gaussian distributions model the uncertainties of the position of ego-agent and the position of the other agent. The 2D-Gaussian model determines the importance score for the interaction between the ego-agent and the other agent by determining the minimum of the overlapping area between the 2D-Gaussian distribution of the uncertainty of the position of the ego-agent and the 2D-Gaussian distribution of the uncertainty of the corresponding position of the other agent on their respective predicted trajectories. The 2D-Gaussian models in fig. 11 illustrate probabilities until 99% with the ellipses around the ego-agent and the other agent, respectively.

Fig. 12 illustrates the survival analysis model as a third example of a stochastic model.

The 2D-Gaussian model takes an uncertainty of the predicted position of the ego-agent on the predicted path of the ego-agent and an uncertainty of the predicted position of the other agent on the predicted path of the other agent into account. 2D-Gaussian distributions approximate the uncertainties of the position of ego-agent and the position of the other agent. The survival analysis model determines the importance score for the interaction between the ego-agent and the other agent by integrating all Gaussian overlaps using a Poisson-dependent survival function.

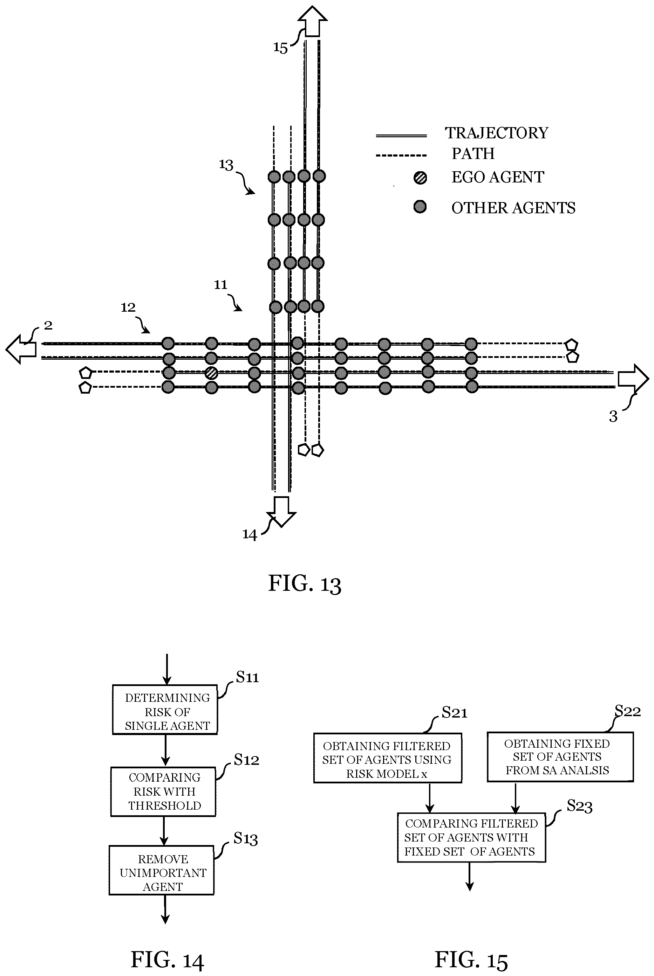

Fig. 13 depicts a traffic scenario at an intersection 11 of two routes 12, 13 involving a plurality of other agents and the ego-agent.

The scenario may represent a road traffic scenario including the ego-agent (ego-vehicle) and 47 other agents (other vehicles). The ego-agent perceives therefore 47 other agents (perceived other agents).

The first route (road) 12 shows two lanes per driving direction 2, 3. The second route (road) 13 has two lanes per driving direction 14, 15.

The road traffic scenario shown in fig. 13 forms the basis for a filtering process based on an importance score.

Fig. 14 illustrates the processing sequence of an exemplary embodiment of the importance filtering process.

The set of perceived other agents represents the filter input data. In a first step S11, a risk for each single other agent is determined. In particular, in step S11, the method computes an importance score for the other agent and the ego-agent by applying the selected risk model.

In step S12, the determined risk for the single agent is compared with a predetermined risk threshold. If the determined risk does not exceed the risk threshold, the method determines that the other agent may be neglected. Given this case, the other agent is removed from the set of perceived other agents for generating the set of filtered agents in step S13.

For determining the risk represented by the other agent by computing the importance score in step S11, the determined importance score is compared to respective importance threshold in step S12. In case, the computed importance score is equal or above the importance threshold, the other agent is maintained in the filtered set of other agents. In case, the computed importance score smaller than the importance threshold in step S12, the other agent is removed from the set of agents in step S13 for generating the filtered set of other agents.

The method performs the steps S11 to 13 for each agent included in the set of agents included in the filer input data. The generated filtered set of agents is output by the filter in the filter output data.

Fig. 15 illustrates the processing sequence of an exemplary embodiment for assessing the performance of the importance filtering process.

A performance analysis of the importance filtering process using a selected risk model includes a step S21 of acquiring a set of other agents in the filter input data, selecting a specific risk model of the plurality of risk models, and generating the filtered set of agents by performing the filtering process according to steps S11 to S13. For obtaining a reference for the performance analysis of the filter, in a step S21, a fixed set of agents is obtained, for example by using a survival analysis as the baseline risk model.

In step S23, the performance analysis of the filter is performed by comparing the filtered set of agents from step S21 with the fixed set of agents obtained from the survival analysis in step S23.

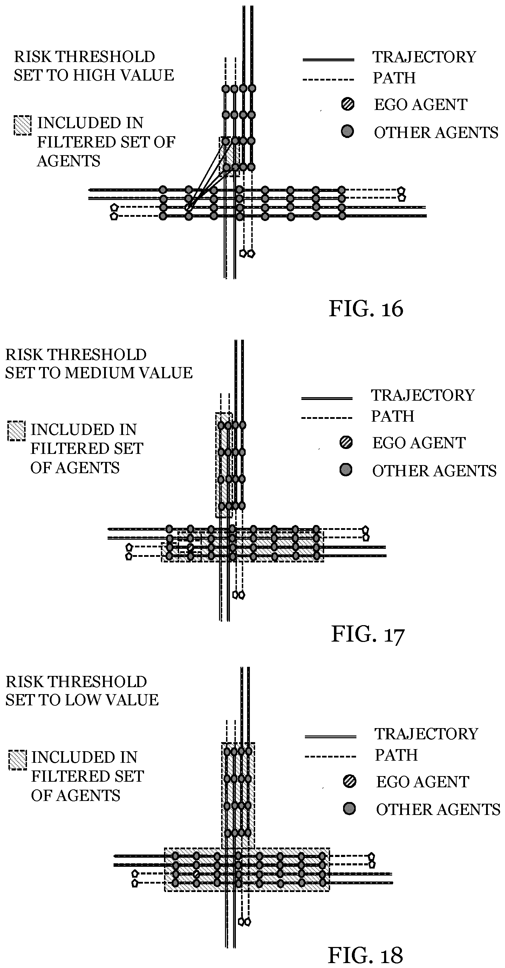

Figs 16 to 17 illustrate the effect of setting the threshold for the importance score in order to determine whether a particular other agent is to be maintained during filtering or to be removed for generating the filtered set of other agents. Figs. 16 to 18 base on the traffic scenario at the intersection 11 of two routes 12, 13 involving a plurality of other agents and the ego-agent shown in and discussed with reference to fig. 13.

Fig. 16 illustrates an application of importance filtering with a first risk threshold.

The first risk threshold for filtering the set of other agents is set to a high threshold value in fig. 16. The high threshold value has the effect, that only for few of the other agents the calculated importance score exceeds the high risk threshold value in the comparison of step S12 of the filtering processing. Thus, the filtered set of other agents included in the filter output data comprises only the most relevant other agents.

Fig. 16 indicates the interactions for the ego-agent on the one hand and the other agents on the other hand, which exceed the threshold value for importance score by solid lines.

Figs. 17 and 18 do not indicate the individual interactions for the ego-agent on the one hand and the other agents on the other hand, which exceed the threshold value for the computed importance score individually, but only indicate the other agents, for which the computed importance score for the interaction with the ego-agent exceeds the respective threshold value, by a hatched area.

Fig. 17 illustrates an application of importance filtering with a second risk threshold. The second risk threshold has a medium threshold value. The second risk threshold is larger than the first threshold value. This medium threshold value has the effect, that for some of the other agents the calculated importance score is smaller than the medium threshold value in the comparison of step S12 of the filtering processing. Thus, the filtered set of other agents included in the filter output data comprises most of the other agents. Only a limited number of the perceived other agents is removed from the set of other agents of the filter input data for generating the filtered set of other agents of the filter output data.

Fig. 18 illustrates an application of importance filtering with a third risk threshold. The third risk threshold has a low threshold value. The third risk threshold is smaller than the first threshold value. This low threshold value has the effect, that for none of the other agents the calculated importance score is smaller than the medium threshold value in the comparison of step S12 of the filtering processing. Thus, the filtered set of other agents included in the filter output data comprises all of the other agents. None of the perceived other agents is removed from the set of other agents of the filter input data for generating the filtered set of other agents of the filter output data, as the hatched area in fig. 18 indicates.

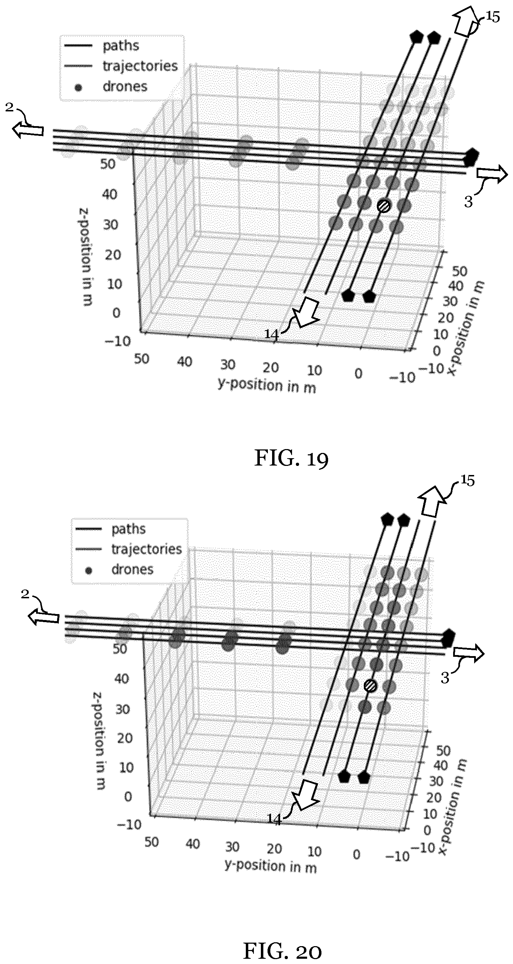

Figs 19 and 20 base on an exemplary dynamic traffic scenario involving a plurality of unmanned air vehicles (drones) including one ego-agent and a plurality of other agents extending the two-dimensional base scenario of fig. 13 into a third dimension.

The traffic scenarios shown in figs. 19 and 20 include 56 agents each, arranged on eight paths. The number of perceived other agent is 55, thereby creating a complex dynamic scenario.

The ego-agent is depicted with a circle with a hatched interior area. Circles with a monotonously-colored area represent the other agents in figs. 19 and 20.

The shade of the colored area representing the other agents in figs. 19 and 20 corresponds to the actual value computed for the importance score for the interaction between the ego-agent and the respective other agent.

Fig. 19 illustrates an application of importance filtering using the current distance risk model.

The darker shade of the other agents close to the ego-agent indicates that the importance score computed by using the current distance risk model results in respectively high calculated importance score values. Contrary thereto, the faint shade of the other agents remote to the ego-agent indicates that the importance score computed by using the current distance risk model results in respectively low calculated importance score values in the example of fig. 19.

Thus, the current distance risk model weights those other agents with a higher importance than those of the other agents, which are currently at a more remote position relative to the ego-agent.

Fig. 20 illustrates an application of importance filtering using the survival-analysis risk model on the same perceived scenario as shown in fig. 19.

The darker shade of the other agents on the same path as the ego-agent and on the paths crossing the path of the ego-agent at the intersection indicates that the importance score computed by using the survival-analysis risk model results in respectively high calculated importance score values for interactions of the ego-agent with these other agents. Contrary thereto, the faint shade of the other agents on paths remote to the path of the ego-agent, and of other agents that already passed the intersection that the ego-agent is approaching indicates that the importance score computed by using the survival-analysis risk model results in respectively low calculated importance score values in the example of fig. 20 for these other agents.

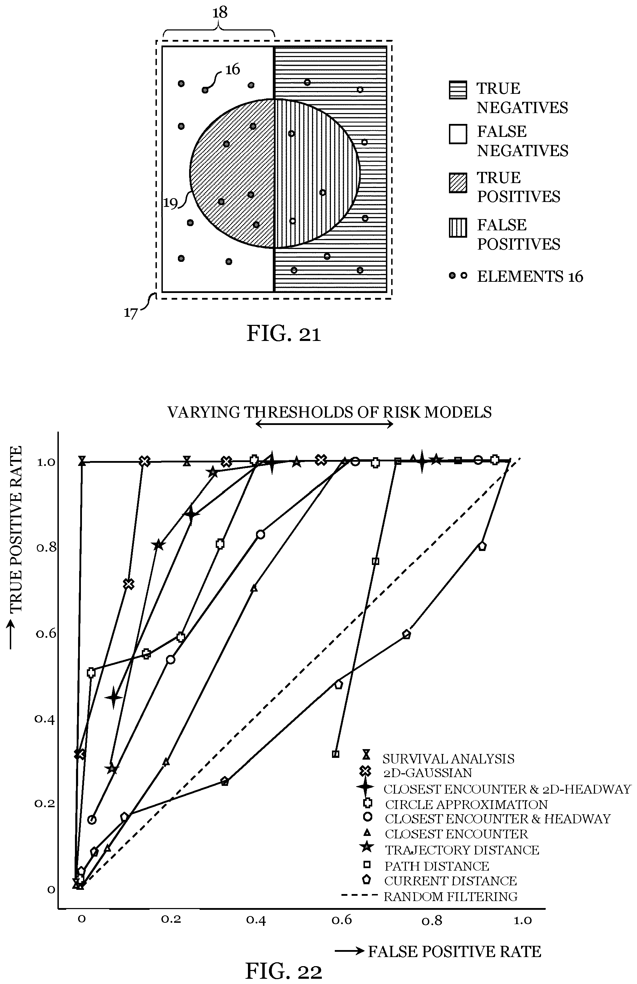

Fig. 21 illustrates basic parameters for a performance analysis of different risk models for filtering of other agents in a traffic scenario.

Fig. 21 arranges in a schematic individual elements 16, each element corresponding to a perceived other agent. The terms TRUE and FALSE describe a correct or incorrect discarding of other agents. The set of other agents in the filter input data arranged within the plane 17 includes a number of true positive elements TP and a number of false positive elements FP, a number of true negative elements TN, and a number of false negative elements FN. Circle 19 defines the set of other agents in the filter output data, which includes the number of true positive elements TP and the number of false positive elements FP.

The relevant elements within the area 18 of the plane 17 are the false negative elements and the true positive elements. For analyzing the filter performance, expression (1) defines a true positive rate:

$$true\ positive\ rate = \frac{TP}{(TP+TN)}; \qquad\qquad (1)$$

and expression (2) a false negative rate:

$$false\ positive\ rate = \frac{TP}{(FP+TN)}; \qquad\qquad (2)$$

The true positive rate according to expression (1) and the false positive rate according to expression (2) are determined for a single stage filter for filtering a set of other agents using one specific selected risk model. This enables to compare the characteristic performance of the different risk models of the plurality of risk models with each other.

Fig. 22 shows a graph, which enables comparing performance of the different risk models for filtering of other agents in a traffic scenario. Fig. 22 quantitatively compares importance filtering results from different risk models in relation to survival analysis. Survival analysis is assumed as the most accurate model and checks with a predefined fixed risk threshold which other agents are filtered out and which are remaining and then compares both sets of filtered agents with the ones from each risk model. Thereby the number of false negative and false positive errors can be computed. For each risk model, the risk threshold may be varied and its performance may be compared with the results obtained via the survival analysis. The plots of fig. 22 shows for different risk thresholds of the risk models the true positive rate over the false positive rate. The true positive rate is the is the more critical parameter of these two rates, as it includes false negative errors, which correspond to agents that are filtered out but which would be considered as important when judged by the survival analysis. Basing a subsequent planning on a filtering that includes false negative errors might result in unsafe results in the planning. In fig. 22, the ideal plot would be as close as possible to an ideal point with a true positive rate = 1 and a false positive rate = 0. Analyzing the individual curves in fig. 22 enables rating the risk models with respect to their filtering performance.

On the abscissa axis of fig. 22, the false positive rate calculated according to expression (2) is depicted. In direction of the ordinate axis, fig. 22 shows the true positive rate according to expression (1). The true positive rate depends on the threshold. A specific point on a curve of a specific risk model corresponds to a specific set threshold. Setting a different threshold corresponds to moving to a different point of the curve of the specific risk model. The filter performance for the same traffic scenario is computed using different selected risk models from the plurality of risk models.

The plurality of risk models shown by the respective curves include the current-distance model, the path-distance model, the trajectory-distance model, closest-encounter model, the encounter-and-headway model, the encounter-and-2d-headway model, the circle-approximation model, the Gaussian model, and the survival-analysis model.

For reference purposes, fig. 22 also shows the respective curve denoting the correspondence between the true positive rate and the false positive rate for an exclusively random filtering with a dashed line.

When comparing the curves shown in fig. 22 that correspond to a filter using a specific risk model, some filters show a comparatively weak performance.

The current-distance model, for example, shows to a similar performance as a random filtering approach. The current distance model is far away from the ideal point (true positive rate = 1 and false positive rate = 0).

The path-distance model stands out with high false positive rates. The path distance model has either low true positive rate values or high false positive rate values, which results in a large distance to the ideal point.

The closest-encounter-and-headway and the closest-encounter model result in a design of the filter with high false positive rates compared with filters designed with most other risk models.

Contrary thereto, closest-encounter-and-2D-headway and the circle-approximation model both show significantly better filter performance, which for those two risk models is also similar.

Closest-encounter model, closest-encounter-with-headway model and closest-encounter-with- 2D-headway model are risk models with a good performance due to their closeness to the ideal point in the top left area of the fig. 22. However, their robustness is low. Their standard deviation is high for the true positive rate. The path distance model shows a better robustness than closest-encounter model, closest-encounter-with-headway model and the closest-encounter-with- 2D-headway model.

The circle approximation model shows a higher robustness and a better performance than the closest encounter models.

The filter design based on the trajectory-distance model shows an advantageously high true positive rate for a rather low false positive rate. The good filtering characteristics of the trajectory-distance model go along with an extraordinarily low computation time for calculating the importance scores, thereby having good computation time and computation complexity.

The survival-analysis model represents the baseline model, which shows ideal filtering performance concerning the true positive rate.

The risk model coming closest to the survival-analysis model with respect to the filtering performance in fig. 22 is the 2D-Gaussian model, in some cases also referenced as the Gaussian-overlap model.

Based on figs. 19, 20 and 22, it may be seen that an accuracy of the individual risk models differs.

Taking into regard the aforementioned examples for individual risk models of the plurality of risk models, an advantageous implementation of the assistance system may use multiple filter stages of the embodiment of fig. 1 including the sequence (cascade) of filters 1 to 6. Filter 1, filter 2 and filter 3 form part of the filtering step, in which the number of perceived other agents provided by the sensor are reduced to a number of filtered agents. The sequentially arranged filters 1, 2, 3 perform filtering based on a selected risk model each, wherein each filter of the filters 1, 2, 3 uses a different selected risk model.

It is particularly advantageous, when the sequential filters use computationally fast models as selected models first in order to reduce the time required for filtering over all three filter stages.

For example, filter 1 may filter the first filter input data based on the path-distance model as the first selected risk model.

For example, filter 2 may subsequently filter the second filter input data based on the trajectory-distance model as the second selected risk model.

For example, filter 3 may proceed by filtering the third filter input data based on the 2D-Gaussian model as the first selected risk model.

The filtering step is followed by a partitioning step (sorting step), which uses three filters, filter 4, filter 5, and filter 6.

For example, filter 4, filter 5, and filter 6 may filter the first filter input data based on the survival analysis model, using respectively differing thresholds in order to partition the other agents into different groups, which are then handled respectively different in a subsequent planning step. The subsequent planning then enables planning and determining actions with interaction aware planning algorithms, which, based on the previous filtering step in sequential filtering stages, and the partitioning step, enable to determining a suitable action or suitable actions for crowded and highly dynamic scenarios in the environment of the ego-agent.

A respective one of the filter stages of the filtering step, for example filter 2 as depicted in fig. 1, may further perform risk shadowing. The term "risk shadowing" encompasses a filtering in a filter stage that uses a heuristic, which considers cases in the dynamic scenario, in which at least one of the ego-agents may not interact with the ego-agent. For example, at least one particular of the other agents cannot collide with the ego-agent because the particular other agent would first collide with another one of the other agents. The complexity and thus the computational effort required for considering group interactions involving more than two agents, the group interaction comprising the ego-agent and at least one other agent, increases excessively. Therefore, a computationally efficient heuristic to resolve these dynamic scenarios characteristic for the crowded environment is particularly advantageous.

The risk-shadowing process provides such a heuristic for an embodiment of the assistance method.

Risk models only regard a risk for a single agent-to-agent interaction. There exist scenarios in the environment, which involve a plurality of moving agents. The following example uses a simple scenario involving the ego-agent and two other agents. The following examples of dynamic scenarios use road traffic scenarios with one ego-agent and two other agents each for illustrative purposes. It is evident that a road traffic environment with dynamic traffic scenario including a plurality of other agents will benefit from the risk shadowing approach to a particular extent.

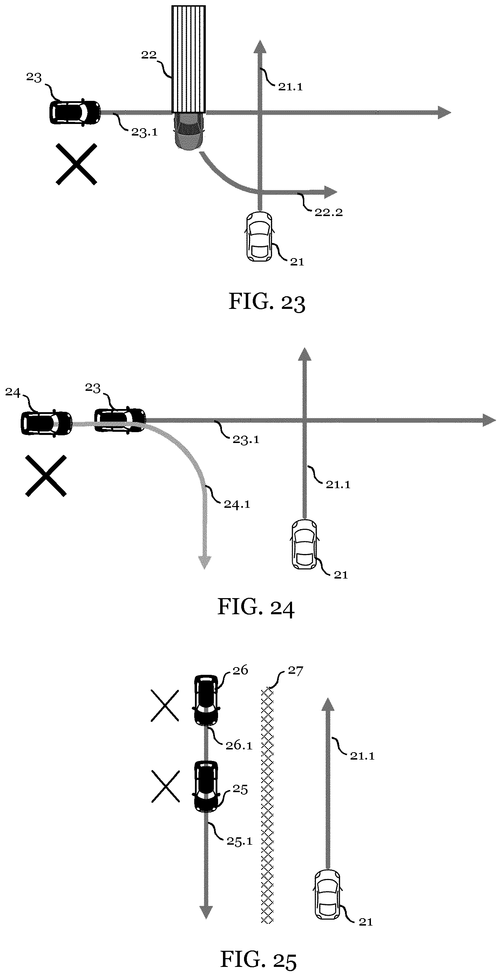

Fig. 23 shows a first exemplary road traffic scenario illustrating the concept of risk shadowing.

The first example shows an intersection in a road traffic scenario, where two roads intersect. The ego-agent is an ego-vehicle 21, which approaches the intersection and intends to follow its driving path 21.1 crossing over the intersection.

On the same road as the ego-vehicle 21, but with an opposing driving direction, one first other agent approaches the intersection. The first other agent is a truck 22, which intends to turn left on the intersection, as the driving path 22.2 shown in fig. 23 indicates. A predicted driving behavior of the truck 22 on its driving path 22.2 will certainly pose a risk with a significant risk to the ego-vehicle 21, as the driving paths 21.1 and 22.1 indicate.

On the further road, which crosses the road on which the ego-vehicle 21 and the truck 22 travel, a second other agent approaches the intersection on its respective driving path 23.1. The second other agent is the other vehicle 23, which intends to continue traveling on its current road straight over the intersection, as the driving path 23.1 indicates. A predicted driving behavior of the other vehicle 23 may pose a collision risk for a collision with the truck 22 on its driving path 22.1 and subsequently a collision risk for a collision involving the ego-vehicle 21 on its driving path 21.1.

Applying risk shadowing in the traffic scenario of fig. 23 determines that from the perspective of the ego-vehicle 21, the other vehicle 23 may be neglected for further consideration in the perceived traffic scenario. The collision risk of the collision between the ego-vehicle 21 with the other vehicle 23 does not exist due to the other vehicle 23 inevitably colliding with the truck 22 before, when entering the intersection on its intended driving path 23.1. The other vehicle 23 does not impose a collision risk on the ego-vehicle 21 provided the truck 22 is driving with a low velocity.

Fig. 24 shows a second exemplary road traffic scenario illustrating the concept of risk shadowing.

The second exemplary road traffic scenario shows the intersection of fig. 23 at which the two roads intersect. The ego-agent is the ego vehicle 21, which approaches the intersection and intends to follow its driving path 21.1 straight onwards, which requires crossing over the intersection.

On the further road, which crosses the road on which the ego-vehicle 21 travels, a first and a second other agent approach the intersection on its respective driving paths 23.1 and 24.1. The first other agent is the other vehicle 23, which intends to continue traveling on its current road straight over the intersection, as the driving path 23.1 indicates. A predicted driving behavior of the other vehicle 23 may pose a collision risk for a collision with the ego-vehicle 21 on its driving path 21.1. The second other agent is a second vehicle 24 following the vehicle 23, wherein the vehicle 24 intends to turn right at the intersection. The vehicle 24 has a driving path 24.1, which only may represent a collision risk to the ego-vehicle 21, when first colliding with the vehicle 23.

Applying risk shadowing in the traffic scenario of fig. 24 determines that from the perspective of the ego-vehicle 21, the other vehicle 24 may be neglected for further consideration in the perceived traffic scenario. The collision risk of the collision between the ego-vehicle 21 with the other vehicle 24 does not exist due to the other vehicle 24 inevitably colliding with the vehicle 23 before, when entering the intersection on its intended driving path 24.1. The vehicle 23 and its driving path 23.1, nevertheless, pose certain collision risk with the ego-vehicle 21, as the intersecting driving paths 21.1 and 23.1 reveal.

Fig. 25 shows a third exemplary road traffic scenario illustrating the concept of risk shadowing.

The third example, which illustrates the advantages of risk shadowing includes a perceived road structure in the environment, which may for example be a traffic barrier 27. The traffic barrier 27 depicted in fig. 25 prevents a collision between the ego-vehicle 21 and the oncoming traffic. In fig. 25, the risk of a collision between the ego-vehicle 21 and a first other vehicle 25 and the risk of a collision between the ego-vehicle 21 and a second other vehicle 26 may be neglected entirely in a planning step. The planning steps determines an action of the ego-vehicle 21 without adversely affecting safety of the future traffic scenario when the ego-vehicle 21 actually executes the determined action.

The structure of the assistance method or system of fig. 1 enables to integrate seamlessly a risk-shadowing step as one of the filters 1, 2, 3. The risk-shadowing step may be implemented before, between or after filtering with an importance score-based filtering step(s).

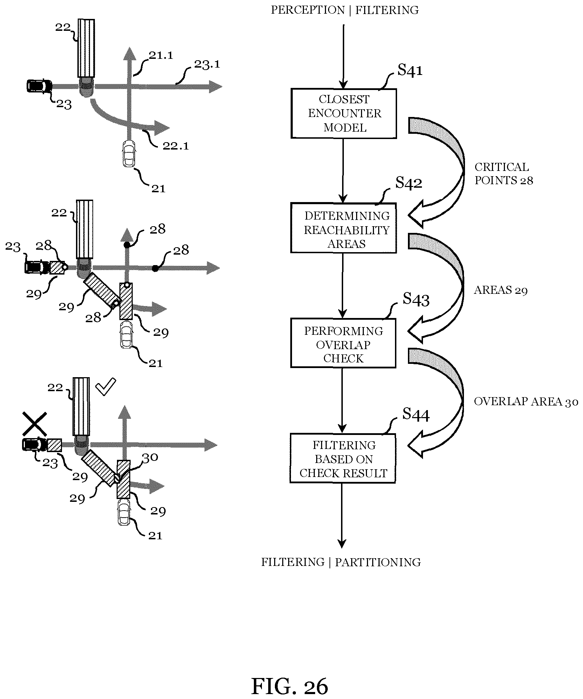

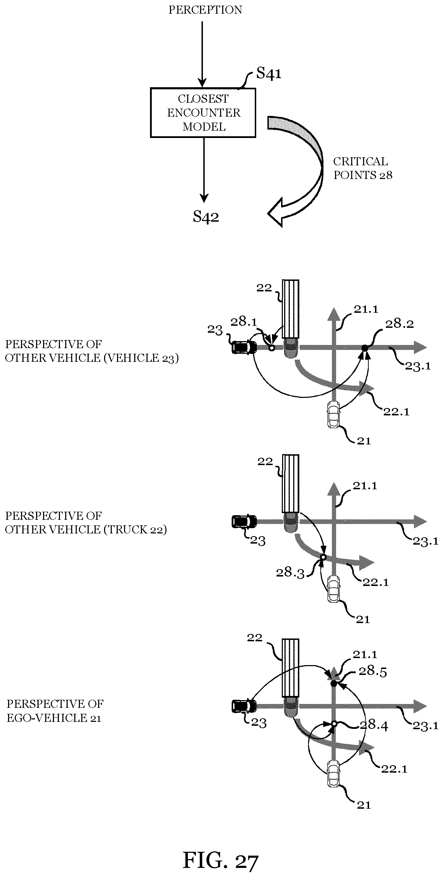

Fig. 26 illustrates the processing sequence of an exemplary embodiment of the risk shadowing process. The individual processing steps S41, S42, S 43 and S44 shown in fig. 26 are then discussed in figs. 27, 28 and 29 in more detail using the first exemplary road traffic scenario discussed with reference to fig. 23 above.

The input data to the risk shadowing process may be the data on the perceived other agents and the position and motion data of the ego-agent. The input data may be acquired from the sensor suite of the ego-agent, and may be preprocessed. Alternatively or additionally, the input data to the risk shadowing process has been subject to a filtering process before performing the risk shadowing process on the input data.

The input data in particular includes data on the current dynamic scenario in the environment of the ego-agent. The input data includes also data on a predicted future evolvement of the traffic scenario. The predicted future evolvement of the scenario may include data on motion paths of other agents present in the environment and predicted trajectories of the other agents. The data may also include data on stationary structures in the environment, such as road geometry, or traffic barriers 27. The data may include regulatory data on applicable traffic rules.

The risk shadowing process includes a first step S41 of determining critical points 28 from the input data, which defines a traffic scenario in the environment of the ego-agent. The system may determine the critical points 28 using a risk model, in particular using the closest encounter model.

Fig. 27 illustrates the first step S41 in the processing sequence of an exemplary embodiment of the risk shadowing process.

Determining the critical points 29 comprises computing future collision points from the perspective of each of the agents present in the traffic scenario. Each of the agents includes the ego-agent and the perceived other agents in the environment of the ego-agent.

Computing the future collision points uses time, distances and points of closest encounter and bases on the paths and the predicted trajectories of the ego-agent and the other agents.

With respect to fig. 26, the critical points 28 from the perspective of the other vehicle 23 (other agent) are determined. Based on the perceived scenario, a first critical point 28.1 from the perspective of the vehicle 23 is a collision risk with the truck 22. A collision point of the vehicle 23 with the ego-vehicle 21 determines a second critical point 28.2 from the perspective of the vehicle 23.

Step S41 proceeds with determining the critical points 28 from the perspective of the truck 22 (other agent). Based on the perceived scenario, a critical point 28.3 from the perspective of the truck 22 is a collision risk with the ego-vehicle 21. A first critical point from the perspective of the truck 22 might be a collision point resulting from intersecting trajectories 22.1 and 23.1. However, this potential critical point is left out, since only the critical points, which are located beyond the other agents' current position, are considered.

The critical points 28 from the perspective of the ego-vehicle 21 based on the perceived scenario include a first critical point 28.4 resulting from the ego-vehicle 21 colliding with the truck 22. A second collision point of the ego-vehicle 21 with the other vehicle 23 determines a second critical point 28.5 from the perspective of the ego-vehicle 21.

Having determined the critical points 28, 28.1, 28. 2, 28.3, 28.4, 28.5 in step S41, the method proceeds with step S42. The critical points 28, 28.1, 28. 2, 28.3, 28.4, 28.5 form the basis for the processing in subsequent step S42.

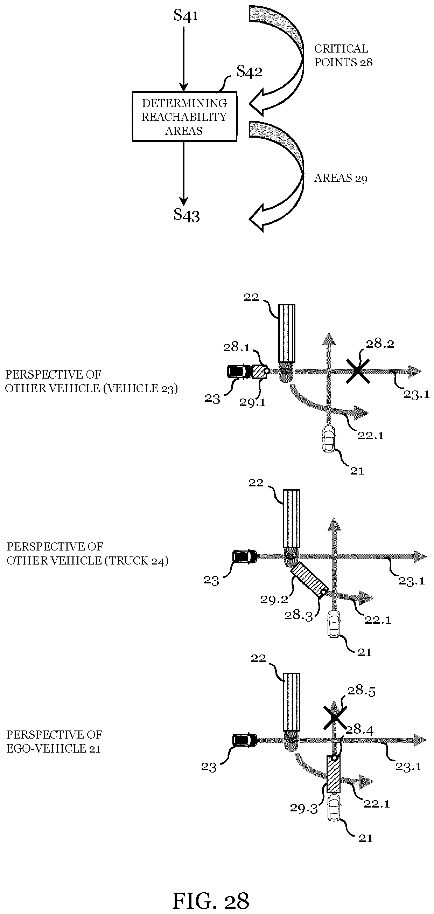

Fig. 28 illustrates the second step S42 in the processing sequence of the first exemplary embodiment of the risk shadowing process.

In step S42, the process of risk shadowing proceeds with generating reachability areas based on the determined critical points 28 from step S41 and the input data. A reachability area of an agent starts at the agent's current position in the environment and ends at a closest point of the agent with any further agent, wherein the closest point is also a collision point of the agent with the further agent.

A reachability area extends along the trajectory of the agents for which the reachability area is determined. The reachability area may have a width corresponding to a width of the agent, whose reachability area it is. The reachability area may correspond to a ground projection of the agent moving along its trajectory from the current position to the first critical point on its trajectory.

Step S42 determines a reachability area for each agent of the ego-agent and the perceived other agents present in the input data to the risk shadowing process.

With regard to fig. 28, step S42 determines a first reachability area 29.1 for the vehicle 23. The first reachability area 29.1 starts at the current position of the vehicle 23 and extends to the first critical point 28.1. The second critical point 28.2 comes after the first critical point 28.1 on the trajectory 23.1 of the vehicle 23 and remains disregarded.

Turning to the perspective of the truck 22, step S42 determines a second reachability area 29.2 for the truck 22. The second reachability area 29.2 starts at the current position of the truck 22 and extends to the first critical point 28.3 on the predicted trajectory 22.1 of the truck 22, which is the only critical point 28 on the trajectory of the truck 22.

Concerning the perspective of the ego-vehicle 21, step S42 determines a third reachability area 29.3 for the ego-vehicle 21. The third reachability area 29.3 starts at the current position of the ego-vehicle 21 and extends to the first critical point 28.4 on the trajectory 21.1 of the ego-vehicle 21. The second critical point 28.5 comes after the first critical point 28.4 on the trajectory 21.1 of the ego-vehicle 21 and accordingly remains disregarded.

Thus, step S42 generates one reachability area for each of the ego-vehicle 21, the truck 22, and the vehicle 23. The method of risk shadowing now proceeds to step S43.

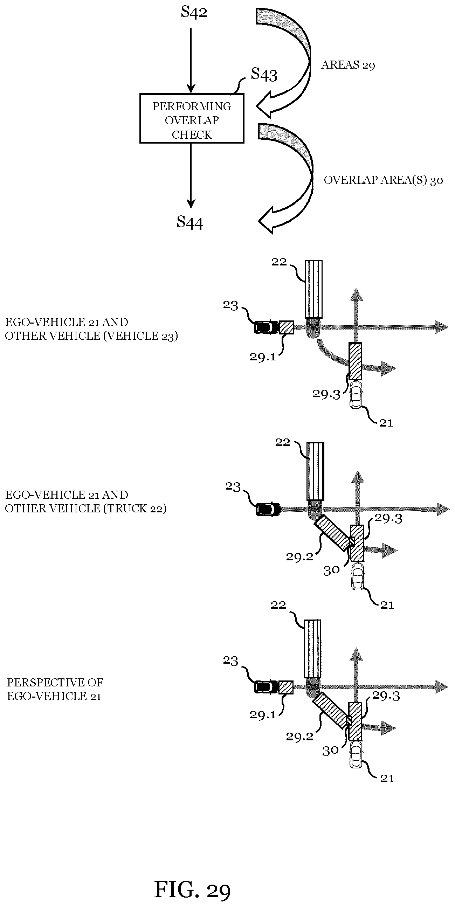

Fig. 29 illustrates the third step S43 in the processing sequence of the exemplary embodiment of the risk shadowing process.

Step S43 searches for an overlap area 30 for the reachability area 29 of the ego-agent and the respective reachability areas 29 of each other agent of the perceived other agents present in the input data to the risk shadowing process.

Alternatively or additionally, Step S43 may include computing a surface area value of each determined reachability area 29 of the ego-agent and the respective reachability areas 29 of each other agent of the perceived other agents for generating an importance score for each interaction of the ego-agent with one other agent with a continuous value.

Additionally or alternatively, Step S43 may include computing respective distances between the reachability area 29 of the ego-agent and the respective reachability areas 29 of each other agent of the perceived other agents for generating an importance score for each interaction of the ego-agent with one other agent with a continuous value.

In the particular example of fig. 29, Step S43 searches for an overlapping area 30 for the first reachability area 29.1 of the vehicle 23 and the third reachability area 29.3 of the ego-agent 21. As the reachability areas 29.1 and 29.3 do not overlap, Step S42 concludes that there is no overlapping area 30 for the interaction between the ego-agent 21 and the vehicle 23.

Concerning the ego-agent 21 and the truck 22, Step S43 searches for an overlapping area 30 for the second reachability area 29.2 of the truck 22 and the third reachability area 29.3 of the ego-agent 21. The reachability areas 29.2 and 29.3 do indeed overlap, so that Step S42 determines an overlapping area 30 for the interaction between the ego-agent 21 and the truck 22.

Thus, the step S42 determines that the truck 22 has an influence on the ego-vehicle 21 as indicated by the existence of the overlapping area 30, whereas the vehicle 23 does not influence the ego-vehicle 21.

In a subsequent step S44 depicted in fig. 26, the risk shadowing method concludes based on the determination of the overlapping area 30, that the other agent, which is represented by the truck 23 in the first exemplary traffic scenario, is to be regarded for the further assessment of the dynamic scenario, whereas the other agent represented by the vehicle 23 in the first exemplary traffic scenario may be disregarded without incurring severe consequences.

Step S44 may include comparing a continuously valued importance score determined in step S43 with a predetermined threshold value for determining whether to disregard another agent for further processing. Thus, the risk shadowing process enables to reduce the number of the perceived other agents in the dynamic scenario in the environment of the ego-agent taking second order interactions between the other agents for filtering into regard. Thereby, the risk shadowing processing is capable to decrease the complexity of the dynamic scenario for further processing, and to improve the possibilities of assisting the ego-agent when implementing further planning and action execution steps based on the result of the risk shadowing.

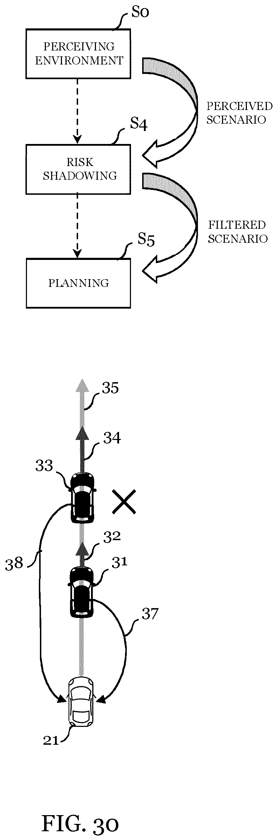

Fig. 30 shows a further application example for the risk shadowing process.

The risk shadowing process S4 bases on the perceived scenario in the environment of the ego-agent. The risk shadowing uses a perception stack that is capable to detect the other agents and their movement characteristics. Risk shadowing therefore comes after a step So of perceiving the dynamic scenario in the environment based on sensor data acquired from the environment.

The process S4 of risk shadowing generates and provides a filtered scenario to the subsequent planning process. The filtered scenario includes other agents, which are of high importance for the predicted further evolvement of the current traffic scenario. Other agents, which, based on their future geometrical driving constraints, are not considered further in the filtered traffic scenario generated by performing risk shadowing of step S4, are neglected.

The risk shadowing process S4 proposes a simple and efficient way to compute bounds of the reachability area 29 in step S42. The risk shadowing process S4 determines the reachability area 29 for the future time steps of the scenario, in particular all future time steps up to a prediction time horizon. The risk shadowing process S4 uses the computed reachability areas 29 for determining an importance score for filtering of other agents in the scenario.

The process of risk shadowing of step S4 may be applied to any dynamic scenario, for example to any driving situation in a traffic environment. The risk shadowing process considers dynamics of the scenario in a computationally efficient manner.

The process of risk shadowing reduces the required computation time required in a subsequent planning step S5, which determines actions and /or warnings based on the filtered scenario. The planning step S5 may include determining actions, which subsequently form a basis for generating and outputting a control signal to actuators of an autonomously or partially autonomously operating ego-agent.

Additionally or alternatively, the planning step S5 may include determining information, which subsequently forms the basis for generating and outputting an information signal or warning signal via a human machine interface to an operator of an autonomously or partially autonomously operating ego-agent.

In the exemplary traffic scenario depicted in the lower part of fig. 30, the ego-vehicle 21 (ego-agent) cruises on a driving lane and approaches first vehicle 32,, which moves with a first velocity 32 on the same lane in the same direction. In front of the first vehicle 31, a second vehicle 33 is driving with a second velocity 34 in the same direction as the ego-vehicle 21 and the first vehicle 31. The second velocity 34 is larger than the first velocity of the first vehicle 31. For example, the first vehicle 31 may brake.

In this dynamic scenario, the first vehicle 31 exerts a strong influence 37 on the further evolvement of the current dynamic scenario from a perspective of the ego-vehicle 21. On the other hand, the second vehicle 33 has only a weak influence on the further evolvement of the current dynamic scenario from the perspective of the ego-vehicle 21.

Performing the risk shadowing process S4 and filtering of the scenario of fig. 30 enables to disregard vehicle 33 from further processing for addressing the immediate driving task from the perspective of the ego-vehicle 21.

Fig. 31 illustrates a simple traffic scenario involving an ego-vehicle and one other vehicle on intersecting paths in the traffic environment.

The filtering process uses a selected risk model for determining the importance value used for filtering the perceived dynamic scenario and the perceived other agents in order to reduce the complexity of the representation of the dynamic scenario.

The selected risk model is a one of plurality of driving risk models. A driving risk model is a stochastic model for an agent-to-agent collision in the environment. Determining an agent-to-agent collision as an example for an interaction between two agents may be determined using predicted trajectories for both agents involved in the collision. Fig. 31 depicts an ego-agent moving with a first velocity along a path of the ego-agent (ego path). The path of the ego-agent intersects in the future with the path along which an other agent moves with a second velocity.

A future position each of the ego-agent and of the other agent may be predicted with an uncertainty. The predictions of the trajectories of the ego-agent and of the other agent each include an uncertainty, which may be considered as a Gaussian and a Poisson distributed uncertainty.

The uncertainty may result from the uncertainty to predict a velocity of the other agent over an extended period of time into the future. The velocity at the current point in time may be known, e.g., by sensing or measuring. For future points in time, actions performed such as braking or accelerating performed by the other agent may each influence the velocity, and therefore the future positions of the other agent.

The risk model enables to predict a probability P (collision) between the ego-agent and the other agent based on the respective trajectories of the ego-agent and of the other agent.

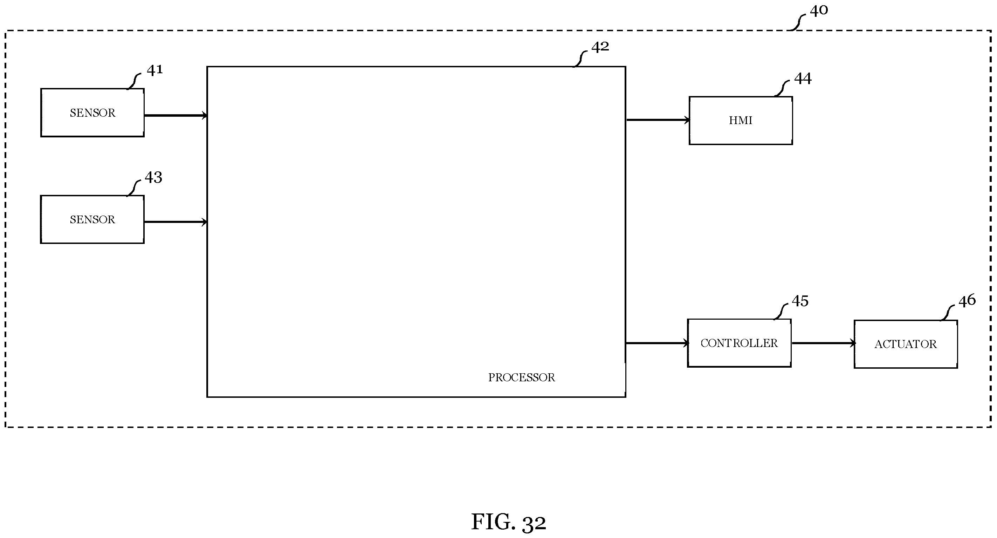

Fig. 32 provides an overview over structural components of the assistance system 40. The system may be an assistance system of the ego-vehicle 21 as an example of the ego-agent.

In the example of the ego-vehicle 21, the ego-vehicle 21 mounts at least one sensor 41 for sensing the environment of the ego-vehicle 21. Such sensor 41 might form part of extensive sensor suite including, for example, one or more of a camera sensor, a LIDAR sensor, a RADAR sensor, a car-to-x communication, an ultrasonic sensor or any combination of these sensors 41. Based on sensor signals provided by the sensors 41, preferably the entire environment of the ego-vehicle 21 is observed. The sensor 41 forwards the sensor data including information of the sensed environment of the ego-vehicle 21 to a processor 42 forming part of an electronic control unit (ECU) of the ego-vehicle 21. The processor 42, alternatively an array of processors 42 arranged in combination with memory performs the method steps or the assistance method.

The ego-vehicle 21 further comprises at least one further sensor 43 that generates position data of the ego-vehicle 21 and motion data of the ego-vehicle 21. The sensor 43 may include a Global Navigation Satellite System (GNSS) sensor. Additionally or alternatively, the sensor 43 includes a vehicle odometer module. The motion data may include data on a current velocity of the ego-vehicle 21, a current acceleration or deceleration (braking) of the ego-vehicle 21, and a turning rate of the ego-vehicle 21.

The processor 42 generates a representation of the current situation in the sensed environment based on the sensor data from the sensor 41, position data of the ego-vehicle 21 and motion data of the ego-vehicle 21.

Starting from the representation of the current situation, a potential ego-vehicle behavior is determined.

Based on the current situation and taking into consideration the potential ego-vehicle behavior, the processor 42 performs a prediction for generating predicted data including predicted future behavior for the other vehicles 22, 23 in the environment.

Based on a selected trajectory and behavior, the processor 42 generates a control signal, and outputs the control signal to a human machine interface 44 (HMI). The control signal may control output of information via the HMI 44 to an operator to inform them of the determined trajectory and behavior that needs to be performed in the current traffic scenario in order to safely operate the ego-vehicle 21.

Additionally or alternatively, the processor 42 provides the control signal to a controller 45 for controlling at least one actuator 46 of the ego-vehicle 21. In case of fully or partially autonomous driving the ego-vehicle 21, the controller 45 receives the control signal and, based on the control signal, controls the actuators 46 of the ego-vehicle 21 to implement the determined trajectory and behavior that needs to be performed in the current traffic scenario in order to safely operate the ego-vehicle 21.

Such actuators 46 may include at least one of a brake system, an accelerator pedal, a steering system, indicator lights and a vehicle-to-x communication system of the ego-vehicle 21.

An application of the processor 42 for outputting control signals for autonomously operating the ego-vehicle 21, illustrates another advantageous application of the method, in which corresponding structural elements implement the method for autonomously controlling a robotic device as the ego-agent in a dynamic scenario in the environment.

**Claims**

1. Computer-implemented method for assisting operation of an agent operating in a dynamic environment involving at least one other agent in the environment of the agent, wherein the method comprises

   acquiring sensor data from at least one sensor physically sensing the environment, including information on the at least one other agent and on physical structures in the environment;

acquiring data, from at least one ego-sensor, including information on position and motion of the agent, wherein the information on position and motion includes information on a position, a heading, a velocity and an acceleration or deceleration of the ego-agent;

calculating an importance score for each agent of the at least one other agent based on the acquired sensor data and the acquired information on position and motion, wherein the importance score is a quantitative physical value describing a relevance of the particular agent for the operated agent based on the acquired sensor data and the acquired information on position and motion;

generating a list comprising the at least one other agent based on the calculated importance scores of the at least one other agent,

partitioning the generated list in at least one partition based on the importance score of the at least one other agent, wherein each partition includes at least one other agent;

generating a prediction result by predicting a behavior of the at least one agent included in the at least one partition based on the sensor data and the position and motion information using a selected behavior prediction model, wherein the selected behavior prediction model is selected from a plurality of behavior prediction models based on the importance score of the at least one agent included in the at least one partition;

outputting the prediction result to a planning and/or control system for operating the agent or for generating and outputting an information signal or warning signal via a human machine interface; and

**characterized in**

**that** calculating the importance score comprises applying a risk shadowing process to the data on the at least one other agent and on the physical structures in the environment, wherein

the risk shadowing process comprises performing a reachability analysis based on the sensor data and the position and motion information for determining occupied areas for the agent and the at least one other agent in the environment over time, determining overlapping areas from the occupied areas of the agent and the at least one other agent, and determining a relevance of each of the at least one other agent based on the determined overlapping areas.

2. The method according to claim 1, wherein
the plurality of behavior prediction models comprises individual behavior prediction models which differ with respect to at least one of prediction accuracy and computational complexity.

3. The method according to claim 1 or 2, wherein

the at least one partition comprise at least a first partition including the other agents having a first range of the importance score and a second partition including the other agents having a second range of the importance score, and

the first range includes importance scores, which are smaller than the importance scores included in the second range, and

the method comprises selecting the behavior prediction model for the first partition with a lower computational complexity than the behavior prediction model for the second partition.

4. The method according to one of the preceding claims, wherein
the method comprises discarding other agents with a calculated importance score below a threshold when generating the list.

5. The method according to any of the preceding claims, wherein

determining the relevance of each of the at least one other agent includes
disregarding the at least one other agent in case the occupied areas of the agent and the at least one other agent do not exist, and/or
computing a continuous relevance score for the at least one other agent by calculating a size of the overlapping area or a distance between the occupied areas of the agent and the at least one other agent.

6. The method according to one of the preceding claims, wherein calculating the importance score includes

applying a risk model that regards an influence of the at least one other agent on the agent for computing the importance score of the at least one other agent, and
decreasing an influence in the applied risk model of a first agent included in the at least one other agent based on an influence in the applied risk model of at least one second agent of the at least one other agent.

7. The method according to one of claims 1 to 5, wherein
calculating the importance score includes applying a risk model that regards an influence of the at least one other agent on the agent for computing the importance score of the at least one other agent.

8. The method according to one of the preceding claims, wherein

the method comprises calculating the importance score as a first importance score for each of a plurality of other agents by applying a first method, discarding a subset of the plurality other agent based on a first filter criterion for the calculated first importance score for generating a first filtered list of the other agents,
calculating the importance score as a second importance score by applying a second method for the plurality of other agents, discarding a second subset of the plurality of other agents included in the generated list based on a second filter criterion for the calculated second importance score for generating a second filtered list of the plurality of other agents.

9. The method according to claim 8, wherein
the first method for calculating the first importance score has a lower computational complexity than the second method for calculating the second importance score.

10. The method according to one of the preceding claims, wherein
calculating the importance score uses a path distance model, a trajectory distance model, a Gaussian model, or a survival analysis model.

11. The method according to one of the preceding claims, wherein

the agent is a mobile robotic device, and the at least one other agent includes other mobile devices, in particular other mobile robotic devices, and/or
the agent is an ego-vehicle, and the at least one other agent is at least one other traffic participant in a road traffic scenario, in particular at least one of other vehicles, cyclists and pedestrians, or
the operated agent and the at least one other agent are vessels in a maritime traffic scenario, or
the operated agent and the at least one other agent are air vehicles in an air traffic scenario, or
the operated agent and the at least one other agent are space vehicles in a space environment.

12. A program comprising instructions, which, when a computer executes the program, cause the computer to carry out the method of one of claims 1 to 11.

13. System for assisting operation of an agent operating in a dynamic scenario involving at least one other agent in an environment of the agent, the system comprises:

at least one sensor configured to acquire sensor data from the environment including information on the at least one other agent and/or on physical structures in the environment;
at least one ego-sensor configured to acquire data including information on position and motion on the agent, wherein the information on position and motion includes information on a position, a heading, a velocity and an acceleration or deceleration of the ego-agent;
at least one processor configured to
calculate an importance score for each agent of the at least one other agent based on the acquired sensor data and the acquired position and motion data, wherein the importance score is a quantitative physical value describing a relevance of the particular agent for the operated agent based on the acquired sensor data and the acquired information on position and motion,
generate a list comprising the at least one other agent based on the calculated importance scores of the at least one other agent,
partition the generated list in at least one partition based on the importance score of the at least one other agent, wherein each partition includes at least one other agent,
generate a prediction result by predicting a behavior of the at least one other agent included in the at least one partition based on the sensor data and the position and motion data using a selected behavior prediction model, wherein the selected behavior prediction model is selected from a plurality of behavior prediction models based on the importance score of the at least one other agent included in the at least one partition, and to output the prediction result to a planning and control system for operating the agent or for generating and outputting an information signal or warning signal via a human machine interface; and

**characterized in**

**that** the processor is configured to calculate the importance score comprising applying a risk shadowing process to the data on the at least one other agent and on the physical structures in the environment, wherein the risk shadowing process comprises performing a reachability analysis based on the sensor data and the position and motion information for determining occupied areas for the agent and the at least one other agent in the environment over time, determining overlapping areas from the occupied areas of the agent and the at least one other agent, and determining a relevance of each of the at least one other agent based on the determined overlapping areas.

**Patentansprüche**

1. Computer-implementiertes Verfahren zur Unterstützung des Betriebs eines Agenten, der in einer dynamischen Umgebung agiert, an der zumindest ein anderer Agent in der Umgebung des Agenten beteiligt ist, wobei das Verfahren aufweist

Erfassen von Sensordaten von zumindest einem Sensor, der die Umgebung physisch abtastet, einschließlich Informationen über den zumindest einen anderen Agenten und über physische Strukturen in der Umgebung;
Erfassen von Daten von zumindest einem Ego-Sensor, einschließlich Informationen über Position und Bewegung des Agenten, wobei die Informationen über Position und Bewegung Informationen über eine Position, einen Kurs, eine Geschwindigkeit und eine Beschleunigung oder Verzögerung des Ego-Agenten enthalten;
Berechnen einer Wichtigkeitsbewertung für jeden Agenten des zumindest einen anderen Agenten auf der Grundlage der erfassten Sensordaten und der erfassten Informationen über Position und Bewegung, wobei die Wichtigkeitsbewertung einen quantitativen physikalischen Wert darstellt, der eine Relevanz des jeweiligen Agenten für den betriebenen Agenten auf der Grundlage der erfassten Sensordaten und der erfassten Informationen über Position und Bewegung beschreibt;
Erzeugen einer den zumindest einen anderen Agenten aufweisenden Liste, auf Grundlage der berechneten Wichtigkeitsbewertungen des zumindest einen anderen Agenten;
Partitionieren der erzeugten Liste in zumindest eine Partition auf Grundlage der Wichtigkeitsbewertung des zumindest einen anderen Agenten, wobei jede Partition zumindest einen anderen Agenten enthält;
Erzeugen eines Vorhersageergebnisses durch Vorhersagen eines Verhaltens des zumindest einen, in der zumindest einen Partition enthaltenen Agenten auf der Grundlage der Sensordaten und der Positions- und Bewegungsinformationen unter Verwendung eines ausgewählten Verhaltensvorhersagemodells, wobei das ausgewählte Verhaltensvorhersagemodell aus einer Mehrzahl an Verhaltensvorhersagemodellen auf der Grundlage der Wichtigkeitsbewertung des zumindest einen, in der zumindest einen Partition enthaltenen Agenten ausgewählt wird;
Ausgeben des Vorhersageergebnisses an ein Planungs- und/oder Steuerungssystem zum Betreiben des Agenten oder zum Erzeugen und Ausgeben eines Informationssignals oder eines Warnsignals über eine Mensch-Maschine-Schnittstelle;

**dadurch gekennzeichnet, dass**

das Berechnen der Wichtigkeitsbewertung das Anwenden eines Risikoabschattungsprozesses auf die Daten über den zumindest einen anderen Agenten und über die physikalischen Strukturen in der Umgebung umfasst, wobei
der Risikoabschattungsprozess das Durchführen einer Erreichbarkeitsanalyse auf der Grundlage der Sensordaten und der Positions- und Bewegungsinformationen zum Bestimmen belegter Bereiche für den Agenten und den zumindest einen anderen Agenten in der Umgebung über die Zeit, das Bestimmen überlappender Bereiche aus den belegten Bereichen des Agenten und des zumindest einen anderen Agenten und das Bestimmen einer Relevanz jedes des zumindest einen anderen Agenten auf der Grundlage der bestimmten überlappenden Bereiche umfasst.

2. Das Verfahren nach Anspruch 1, wobei
die Mehrzahl an Verhaltensvorhersagemodellen einzelne Verhaltensvorhersagemodelle umfasst, die sich in Bezug auf Vorhersagegenauigkeit und/oder Berechnungskomplexität unterscheiden.

3. Das Verfahren nach Anspruch 1 oder 2, wobei

die zumindest eine Partition zumindest eine erste Partition umfasst, welche die anderen Agenten mit einem ersten Bereich der Wichtigkeitsbewertung enthält, sowie eine zweite Partition, die die anderen Agenten mit einem zweiten Bereich der Wichtigkeitsbewertung enthält, und wobei

der erste Bereich Wichtigkeitsbewertungen enthält, die kleiner sind als die in dem zweiten Bereich enthaltenen Wichtigkeitsbewertungen, und wobei

das Verfahren das Auswählen des Verhaltensvorhersagemodells für die erste Partition mit einer geringeren Berechnungskomplexität als das Verhaltensvorhersagemodell für die zweite Partition umfasst.

4. Das Verfahren nach einem der vorherigen Ansprüche, wobei

das Verfahren, bei der Erstellung der Liste, das Verwerfen anderer Agenten mit einem berechneten Wichtigkeitswert unterhalb eines Schwellenwertes umfasst.

5. Das Verfahren nach einem der vorherigen Ansprüche, wobei

das Bestimmen der Relevanz jedes des zumindest einen anderen Agenten umfasst:

das nicht Berücksichtigen des zumindest einen anderen Agenten, im Falle, dass die belegten Bereiche des Agenten und des zumindest einen anderen Agenten nicht existieren, und/oder

das Berechnen einer kontinuierlichen Relevanzbewertung für den zumindest einen anderen Agenten durch Berechnen einer Größe des Überlappungsbereichs oder eines Abstands zwischen den belegten Bereichen des Agenten und des zumindest einen anderen Agenten.

6. Das Verfahren nach einem der vorherigen Ansprüche, wobei das Berechnen der Wichtigkeitsbewertung umfasst:

das Anwenden eines Risikomodells, welches einen Einfluss des zumindest einen anderen Agenten auf den Agenten berücksichtigt, um die Wichtigkeitsbewertung des zumindest einen anderen Agenten zu berechnen, und

das Verringern eines Einflusses in dem angewendeten Risikomodell eines ersten Agenten, der in dem zumindest einen anderen Agenten enthalten ist, auf Grundlage eines Einflusses in dem angewendeten Risikomodell von zumindest einem zweiten Agenten des zumindest einen anderen Agenten.

7. Das Verfahren nach einem der Ansprüche 1 bis 5, wobei

das Berechnen der Wichtigkeitsbewertung das Anwenden eines Risikomodells umfasst, welches einen Einfluss des zumindest einen anderen Agenten auf den Agenten berücksichtigt, um die Wichtigkeitsbewertung des zumindest einen anderen Agenten zu berechnen.

8. Das Verfahren nach einem der vorherigen Ansprüche, wobei das Verfahren umfasst:

das Berechnen der Wichtigkeitsbewertung als eine erste Wichtigkeitsbewertung für jeden einer Mehrzahl an anderen Agenten durch Anwenden eines ersten Verfahrens, das Verwerfen einer Teilmenge der Mehrzahl an anderen Agenten auf der Grundlage eines ersten Filterkriteriums für die berechnete erste Wichtigkeitsbewertung zum Erzeugen einer ersten gefilterten Liste der anderen Agenten,

das Berechnen der Wichtigkeitsbewertung als eine zweite Wichtigkeitsbewertung durch Anwenden eines zweiten Verfahrens für die Mehrzahl an anderen Agenten, das Verwerfen einer zweiten Teilmenge der Mehrzahl an anderen Agenten, die in der erzeugten Liste enthalten sind, auf der Grundlage eines zweiten Filterkriteriums für die berechnete zweite Wichtigkeitsbewertung zum Erzeugen einer zweiten gefilterten Liste der Mehrzahl an anderen Agenten.

9. Das Verfahren nach Anspruch 8, wobei

das erste Verfahren zum Berechnen der ersten Wichtigkeitsbewertung eine geringere Berechnungskomplexität aufweist als das zweite Verfahren zum Berechnen der zweiten Wichtigkeitsbewertung.

10. Das Verfahren nach einem der vorherigen Ansprüche, wobei

zum Berechnen der Wichtigkeitsbewertung ein Pfadabstands-Modell, ein Trajektorienabstands-Modell, ein Gauß-Modell oder ein Ereigniszeitanalyse-Modell verwendet wird.

11. Das Verfahren nach einem der vorherigen Ansprüche, wobei

der Agent eine mobile Robotik-Vorrichtung ist und der zumindest eine andere Agent andere mobile Vorrichtungen, insbesondere andere mobile Robotik-Vorrichtungen, umfasst, und/oder

der Agent ein Ego-Fahrzeug ist, und der zumindest eine andere Agent zumindest ein anderer Verkehrsteilnehmer in einem Straßenverkehrsszenario ist, insbesondere zumindest einer von anderen Fahrzeugen, Radfahrern und Fußgängern, oder

der betriebene Agent und der zumindest eine andere Agent Schiffe in einem maritimen Verkehrsszenario sind, oder

der betriebene Agent und der zumindest eine andere Agent Luftfahrzeuge in einem Luftverkehrsszenario sind, oder

der betriebene Agent und der zumindest eine andere Agent Raumfahrzeuge in einer Weltraumumgebung sind.

12. Ein Programm, das Anweisungen enthält, die, wenn ein Computer das Programm ausführt, den Computer dazu veranlassen, das Verfahren nach einem der Ansprüche 1 bis 11 auszuführen.

13. System zum Unterstützen des Betriebs eines Agenten, der in einem dynamischen Szenario agiert, an dem zumindest ein anderer Agent in einer Umgebung des Agenten beteiligt ist, wobei das System aufweist:

zumindest einen Sensor, der so konfiguriert ist, dass er Sensordaten aus der Umgebung erfasst, einschließlich Informationen über den zumindest einen anderen Agenten und/oder über physikalische Strukturen in der Umgebung;

zumindest einen Ego-Sensor, der so konfiguriert ist, dass er Daten erfasst, die Informationen über Position und Bewegung des Agenten enthalten, wobei die Informationen über Position und Bewegung Informationen über eine Position, einen Kurs, eine Geschwindigkeit und eine Beschleunigung oder Verzögerung des Ego-Agenten enthalten;

zumindest einen Prozessor, der konfiguriert ist, um

für jeden Agenten des zumindest einen anderen Agenten auf der Grundlage der erfassten Sensordaten und der erfassten Positions- und Bewegungsdaten eine Wichtigkeitsbewertung zu berechnen, wobei die Wichtigkeitsbewertung einen quantitativen physikalischen Wert darstellt, der auf der Grundlage der erfassten Sensordaten und der erfassten Informationen über Position und Bewegung eine Relevanz des bestimmten Agenten für den betriebenen Agenten beschreibt;

auf der Grundlage der berechneten Wichtigkeitsbewertungen des zumindest einen anderen Agenten eine Liste zu erzeugen, die den zumindest einen anderen Agenten umfasst;

auf der Grundlage der Wichtigkeitsbewertung des zumindest einen anderen Agenten die erzeugte Liste in zumindest eine Partition zu partitionieren, wobei jede Partition zumindest einen anderen Agenten enthält,

auf der Grundlage der Sensordaten und der Positions- und Bewegungsdaten unter Verwendung eines ausgewählten Verhaltensvorhersagemodells durch Vorhersagen eines Verhaltens des zumindest einen anderen Agenten, der in der zumindest einen Partition enthalten ist, ein Vorhersageergebnis zu erzeugen, wobei das ausgewählte Verhaltensvorhersagemodell auf der Grundlage der Wichtigkeitsbewertung des zumindest einen anderen Agenten, der in der zumindest einen Partition enthalten ist, aus einer Mehrzahl an Verhaltensvorhersagemodellen ausgewählt wird, und um

das Vorhersageergebnis an ein Planungs- und Steuerungssystem zum Betreiben des Agenten oder zum Erzeugen und Ausgeben eines Informationssignals oder eines Warnsignals über eine Mensch-Maschine-Schnittstelle auszugeben;

**dadurch gekennzeichnet, dass**

der Prozessor so konfiguriert ist, dass er die Wichtigkeitsbewertung berechnet, die das Anwenden eines Risikoabschattungsprozesses auf die Daten über den zumindest einen anderen Agenten und über die physikalischen Strukturen in der Umgebung umfasst, wobei

der Risikoabschattungsprozess das Durchführen einer Erreichbarkeitsanalyse auf der Grundlage der Sensordaten und der Positions- und Bewegungsinformationen zum Bestimmen belegter Bereiche für den Agenten und den zumindest einen anderen Agenten in der Umgebung über die Zeit, das Bestimmen überlappender Bereiche aus den belegten Bereichen des Agenten und des zumindest einen anderen Agenten und das Bestimmen einer Relevanz jedes des zumindest einen anderen Agenten auf der Grundlage der bestimmten überlappenden Bereiche umfasst.

**Revendications**

1. Procédé mis en œuvre par ordinateur pour faciliter le fonctionnement d'un agent fonctionnant dans un environnement dynamique impliquant au moins un autre agent dans l'environnement de l'agent, dans lequel le procédé comprend

   l'acquisition de données de capteur à partir d'au moins un capteur détectant physiquement l'environnement, comportant des informations sur l'au moins un autre agent et sur des structures physiques dans l'environnement;
   l'acquisition de données, à partir d'au moins un capteur ego, comportant des informations sur une position et un mouvement de l'agent, dans lequel les informations sur une position et un mouvement comportent des informations sur une position, un cap, une vitesse et une accélération ou un ralentissement de l'agent ego;
   le calcul d'un score d'importance pour chaque agent de l'au moins un autre agent sur la base des données de capteur acquises et des informations acquises sur une position et un mouvement, dans lequel le score d'importance est une valeur physique quantitative décrivant une pertinence de l'agent particulier pour l'agent en fonctionnement sur la base des données de capteur acquises et des informations acquises sur une position et un mouvement;
   la génération d'une liste comprenant l'au moins un autre agent sur la base des scores d'importance calculés de l'au moins un autre agent,
   le partitionnement de la liste générée en au moins une partition sur la base du score d'importance de l'au moins un autre agent, dans lequel chaque partition comporte au moins un autre agent;
   la génération d'un résultat de prédiction en prédisant un comportement de l'au moins un agent compris dans l'au moins une partition sur la base des données de capteur et des informations de position et de mouvement à l'aide d'un modèle de prédiction de comportement sélectionné, dans lequel le modèle de prédiction de comportement sélectionné est sélectionné dans une pluralité de modèles de prédiction de comportement sur la base du score d'importance de l'au moins un agent compris dans l'au moins une partition;
   la délivrance du résultat de prédiction à un système de planification et/ou de commande pour faire fonctionner l'agent ou pour générer et délivrer un signal d'information ou un signal d'avertissement via un interface homme-machine; et
   **caractérisé en ce que** le calcul du score d'importance comprend l'application d'un procédé de masquage de risque aux données sur l'au moins un autre agent et sur les structures physiques dans l'environnement, dans lequel
   le procédé de masquage de risque comprend la réalisation d'une analyse d'accessibilité sur la base des données de capteur et des informations de position et de mouvement pour déterminer des zones occupées pour l'agent et l'au moins un autre agent dans l'environnement au fil du temps, la détermination de zones de chevauchement à partir des zones occupées de l'agent et de l'au moins un autre agent, et la détermination d'une pertinence de chacun de l'au moins un autre agent sur la base des zones de chevauchement déterminées.

2. Procédé selon la revendication 1, dans lequel
   la pluralité de modèles de prédiction de comportement comprend des modèles de prédiction de comportement individuels qui diffèrent par rapport à au moins une parmi une précision de prédiction et une complexité de calcul.

3. Procédé selon la revendication 1 ou 2, dans lequel

   l'au moins une partition comprend au moins une première partition comportant les autres agents ayant une première plage du score d'importance et une deuxième partition comportant les autres agents ayant une deuxième plage du score d'importance, et
   la première plage comporte des scores d'importance, qui sont plus petits que les scores d'importance compris dans la deuxième plage, et
   le procédé comprend la sélection du modèle de prédiction de comportement pour la première partition avec une complexité de calcul inférieure relativement au modèle de prédiction de comportement pour la deuxième partition.

4. Procédé selon l'une des revendications précédentes, dans lequel
   le procédé comprend l'abandon d'autres agents avec un score d'importance calculé en dessous d'un seuil lors de la génération de la liste.

5. Procédé selon l'une quelconque des revendications précédentes, dans lequel

   la détermination de la pertinence de chacun de l'au moins un autre agent comporte

l'abandon de l'au moins un autre agent dans le cas où les zones occupées de l'agent et de l'au moins un autre agent n'existent pas, et/ou

le calcul d'un score de pertinence continu pour l'au moins un autre agent en calculant une taille de la zone de chevauchement ou une distance entre les zones occupées de l'agent et de l'au moins un autre agent.

**6.** Procédé selon l'une des revendications précédentes, dans lequel le calcul du score d'importance comporte

l'application d'un modèle de risque qui concerne une influence de l'au moins un autre agent sur l'agent pour calculer le score d'importance de l'au moins un autre agent, et

la diminution d'une influence dans le modèle de risque appliqué d'un premier agent compris dans l'au moins un autre agent sur la base d'une influence dans le modèle de risque appliqué d'au moins un deuxième agent de l'au moins un autre agent.

**7.** Procédé selon l'une des revendications 1 à 5, dans lequel
le calcul du score d'importance comporte l'application d'un modèle de risque qui concerne une influence de l'au moins un autre agent sur l'agent pour calculer le score d'importance de l'au moins un autre agent.

**8.** Procédé selon l'une des revendications précédentes, dans lequel

le procédé comprend le calcul du score d'importance en tant que premier score d'importance pour chacun d'une pluralité d'autres agents en appliquant un premier procédé, abandonnant un sous-ensemble de la pluralité d'autres agents sur la base d'un premier critère de filtre pour le premier score d'importance calculé pour générer une première liste filtrée des autres agents,

le calcul du score d'importance en tant que deuxième score d'importance en appliquant un deuxième procédé pour la pluralité d'autres agents, abandonnant un deuxième sous-ensemble de la pluralité d'autres agents compris dans la liste générée sur la base d'un deuxième critère de filtre pour le deuxième score d'importance calculé pour générer une deuxième liste filtrée de la pluralité d'autres agents.

**9.** Procédé selon la revendication 8, dans lequel
le premier procédé pour calculer le premier score d'importance a une complexité de calcul inférieure relativement au deuxième procédé pour calculer le deuxième score d'importance.

**10.** Procédé selon l'une des revendications précédentes, dans lequel
le calcul du score d'importance utilise un modèle de distance de chemin, un modèle de distance de trajectoire, un modèle gaussien, ou un modèle d'analyse de survie.

**11.** Procédé selon l'une des revendications précédentes, dans lequel

l'agent est un dispositif robotique mobile, et l'au moins un autre agent comporte d'autres dispositifs mobiles, en particulier d'autres dispositifs robotiques mobiles, et/ou

l'agent est un véhicule ego, et l'au moins un autre agent est au moins un autre participant au trafic dans un scénario de trafic routier, en particulier au moins un parmi d'autres véhicules, des cyclistes et des piétons, ou l'agent en fonctionnement et l'au moins un autre agent sont des navires dans un scénario de trafic maritime, ou l'agent en fonctionnement et l'au moins un autre agent sont des véhicules aériens dans un scénario de trafic aérien, ou

l'agent en fonctionnement et l'au moins un autre agent sont des véhicules spatiaux dans un environnement spatial.

**12.** Programme comprenant des instructions, qui, lorsqu'un ordinateur exécute le programme, amènent l'ordinateur à effectuer le procédé selon l'une des revendications 1 à 11.

**13.** Système pour faciliter le fonctionnement d'un agent fonctionnant dans un scénario dynamique impliquant au moins un autre agent dans un environnement de l'agent, le système comprend:

au moins un capteur configuré pour acquérir des données de capteur à partir de l'environnement comportant des informations sur l'au moins un autre agent et/ou sur des structures physiques dans l'environnement;

au moins un capteur ego configuré pour acquérir des données comportant des informations sur une position et un mouvement sur l'agent, dans lequel les informations sur une position et un mouvement comportent des informations sur une position, un cap, une vitesse et une accélération ou un ralentissement de l'agent ego;
au moins un processeur configuré pour

calculer un score d'importance pour chaque agent de l'au moins un autre agent sur la base des données de capteur acquises et des données de position et de mouvement acquises, dans lequel le score d'importance est une valeur physique quantitative décrivant une pertinence de l'agent particulier pour l'agent en fonctionnement sur la base des données de capteur acquises et des informations acquises sur une position et un mouvement, générer une liste comprenant l'au moins un autre agent sur la base des scores d'importance calculés de l'au moins un autre agent,

partitionner la liste générée en au moins une partition sur la base du score d'importance de l'au moins un autre agent, dans lequel chaque partition comporte au moins un autre agent,

générer un résultat de prédiction en prédisant un comportement de l'au moins un autre agent compris dans l'au moins une partition sur la base des données de capteur et des données de position et de mouvement à l'aide d'un modèle de prédiction de comportement sélectionné, dans lequel le modèle de prédiction de comportement sélectionné est sélectionné dans une pluralité de modèles de prédiction de comportement sur la base du score d'importance de l'au moins un autre agent compris dans l'au moins une partition, et pour délivrer le résultat de prédiction à un système de planification et de commande pour faire fonctionner l'agent ou pour générer et délivrer un signal d'information ou un signal d'avertissement via un interface homme-machine; et

**caractérisé en**

**ce que** le processeur est configuré pour calculer le score d'importance comprenant l'application d'un procédé de masquage de risque aux données sur l'au moins un autre agent et sur les structures physiques dans l'environnement, dans lequel

le procédé de masquage de risque comprend la réalisation d'une analyse d'accessibilité sur la base des données de capteur et des informations de position et de mouvement pour déterminer des zones occupées pour l'agent et l'au moins un autre agent dans l'environnement au fil du temps, la détermination de zones de chevauchement à partir des zones occupées de l'agent et de l'au moins un autre agent, et la détermination d'une pertinence de chacun de l'au moins un autre agent sur la base des zones de chevauchement déterminées.

FIG. 1

PERCEIVED AGENTS: 32 ⟹ [FILTER] ⟹ FILTERED AGENTS: 14

RISK MODEL

FIG. 2

FIG. 3

EP 4 254 121 B1

| DISTANCE MODELS | TIME MODELS | STOCHASTIC MODELS | |
|---|---|---|---|
| CURRENT DISTANCE | CLOSEST ENCOUNTER | CIRCLE APPROXIMATION | |
| PATH DISTANCE | CLOSEST ENCOUNTER & HEADWAY | 2D-GAUSSIAN | |
| | CLOSEST ENCOUNTER & 2D-HEADWAY | SURVIVAL ANALYSIS | |

FIG. 4

OTHER POSITION

EGO-POSITION

OTHER VEHICLE

CURRENT DISTANCE

EGO-VEHICLE

FIG. 5

EGO-PATH

OTHER PATH

PATH DISTANCE

OTHER VEHICLE

EGO-VEHICLE

FIG. 6

EGO-PATH

OTHER PATH

ENCOUNTER DISTANCE
OTHER VELOCITY

EGO-VELOCITY

OTHER VEHICLE

EGO-VEHICLE

FIG. 7

EGO-PATH

OTHER PATH

HEADWAY

EGO-VELOCITY

OTHER VELOCITY

OTHER VEHICLE

EGO-VEHICLE

FIG. 8

EGO-PATH

OTHER PATH

OTHER VEHICLE

2D-HEADWAY

EGO-VEHICLE

FIG. 9

EGO-PATH

OTHER PATH

CIRCLE DISTANCE

OTHER UNCERTAINTY

EGO-UNCERTAINTY

OTHER VEHICLE

EGO-VEHICLE

FIG. 10

EGO-PATH

OTHER PATH

OTHER UNCERTAINTY

EGO-UNCERTAINTY

OVERLAP

OTHER VEHICLE

EGO-VEHICLE

FIG. 11

EGO-PATH

OTHER PATH

POISSON
OTHER UNCERTAINTY

POISSON
EGO-UNCERTAINTY

OTHER VEHICLE

INTEGRATED
OVERLAP

EGO-VEHICLE

FIG. 12

**FIG. 13**

**FIG. 14**

**FIG. 15**

RISK THRESHOLD
SET TO HIGH VALUE

INCLUDED IN
FILTERED SET OF
AGENTS

——— TRAJECTORY
--------- PATH
⊘ EGO AGENT
● OTHER AGENTS

FIG. 16

RISK THRESHOLD
SET TO MEDIUM VALUE

INCLUDED IN
FILTERED SET
OF AGENTS

——— TRAJECTORY
--------- PATH
⊘ EGO AGENT
● OTHER AGENTS

FIG. 17

RISK THRESHOLD
SET TO LOW VALUE

INCLUDED IN
FILTERED SET
OF AGENTS

——— TRAJECTORY
--------- PATH
⊘ EGO AGENT
● OTHER AGENTS

FIG. 18

FIG. 19

FIG. 20

FIG. 21

TRUE
NEGATIVES

FALSE
NEGATIVES

TRUE
POSITIVES

FALSE
POSITIVES

● ○ ELEMENTS 16

VARYING THRESHOLDS OF RISK MODELS

TRUE POSITIVE RATE

FALSE POSITIVE RATE

SURVIVAL ANALYSIS
2D-GAUSSIAN
CLOSEST ENCOUNTER & 2D-HEADWAY
CIRCLE APPROXIMATION
CLOSEST ENCOUNTER & HEADWAY
CLOSEST ENCOUNTER
TRAJECTORY DISTANCE
PATH DISTANCE
CURRENT DISTANCE
RANDOM FILTERING

FIG. 22

FIG. 23

FIG. 24

FIG. 25

PERCEPTION | FILTERING

S41
CLOSEST ENCOUNTER MODEL

CRITICAL POINTS 28

S42
DETERMINING REACHABILITY AREAS

AREAS 29

S43
PERFORMING OVERLAP CHECK

OVERLAP AREA 30

S44
FILTERING BASED ON CHECK RESULT

FILTERING | PARTITIONING

FIG. 26

PERCEPTION

S41

CLOSEST
ENCOUNTER
MODEL

CRITICAL
POINTS 28

S42

PERSPECTIVE OF
OTHER VEHICLE (VEHICLE 23)

22

23   28.1                         21.1        28.2

                                              23.1

                                              22.1

                                         21

PERSPECTIVE OF
OTHER VEHICLE (TRUCK 22)

22

                                   21.1

23                                            23.1

28.3                           22.1

                                    21

PERSPECTIVE OF
EGO-VEHICLE 21

22

                                   21.1
                                   28.5

23                            28.4      23.1

                                 22.1

                              21

FIG. 27

S41

S42

CRITICAL
POINTS 28

DETERMINING
REACHABILITY
AREAS

AREAS 29

S43

PERSPECTIVE OF
OTHER VEHICLE (VEHICLE 23)

22

28.1

28.2

23.1

23      29.1

22.1

21

PERSPECTIVE OF
OTHER VEHICLE (TRUCK 24)

22

23

23.1

29.2

28.3

22.1

21

PERSPECTIVE OF
EGO-VEHICLE 21

22

28.5

28.4

23

23.1

29.3

22.1

21

FIG. 28

S42

S43

AREAS 29

PERFORMING
OVERLAP
CHECK

OVERLAP AREA(S) 30

S44

22

23

EGO-VEHICLE 21 AND
OTHER VEHICLE (VEHICLE 23)

29.1

29.3

21

22

23

EGO-VEHICLE 21 AND
OTHER VEHICLE (TRUCK 22)

29.3

29.2

30

21

22

23

PERSPECTIVE OF
EGO-VEHICLE 21

29.3

29.1

29.2

30

21

FIG. 29

FIG. 30

path of ego-agent

path of other agent

P (future collision)

other agent

ego-agent

velocity of
other agent

constant velocity

predicted time

velocity of
other agent

braking

predicted time

velocity of
other agent

accelerating

predicted time

velocity of
ego-agent

?

→ brake!

predicted time

FIG. 31

FIG. 32

**EP 4 254 121 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015200215 A1
- EP 3683782 A1
- EP 2950294 A1
- US 2020159215 A1